(19)

Europäisches
Patentamt
European
Patent Office
Office européen
des brevets

(11) **EP 2 046 149 B1**

(12) **EUROPEAN PATENT SPECIFICATION**

(45) Date of publication and mention
of the grant of the patent:
**03.11.2010 Bulletin 2010/44**

(51) Int Cl.:
***A23L 1/29*** *(2006.01)*

(21) Application number: **07812498.9**

(22) Date of filing: **29.06.2007**

(86) International application number:
**PCT/US2007/072528**

(87) International publication number:
**WO 2008/005862 (10.01.2008 Gazette 2008/02)**

(54) **ENRICHED INFANT FORMULAS**

ANGEREICHERTE SÄUGLINGSANFANGSNAHRUNG

FORMULATIONS ENRICHIES POUR BÉBÉ

(84) Designated Contracting States:
**AT BE BG CH CY CZ DE DK EE ES FI FR GB GR
HU IE IS IT LI LT LU LV MC MT NL PL PT RO SE
SI SK TR**

(30) Priority: **30.06.2006 US 479504**

(43) Date of publication of application:
**15.04.2009 Bulletin 2009/16**

(73) Proprietor: **ABBOTT LABORATORIES
Abbott Park, IL 60064 (US)**

(72) Inventors:
• **RUEDA-CABRERA, Ricardo
18008 Granada (ES)**
• **BARRANCO, Alejandro
18110 Las Gabias (ES)**
• **RAMIREZ, Maria
18003 Granada (ES)**
• **VAZQUEZ, Enrique
18151 Ogijares (ES)**
• **PRIETO, Pedro
Columbus, OH 43235 (US)**
• **DOHNALEK, Margaret
Gurnee, IL 60031 (US)**
• **VALVERDE, Eduardo
E-18198 Cajar (ES)**

(74) Representative: **Modiano, Micaela Nadia et al
Modiano Josif Pisanty & Staub Ltd
Thierschstrasse 11
80538 München (DE)**

(56) References cited:
**DE-A1- 4 430 041      US-A- 4 762 822**

**US-A1- 2004 265 462**

• **RUEDA R ET AL: "ADDITION OF GANGLIOSIDES
TO AN ADAPTED MILK FORMULA MODIFIES
LEVELSOF FECAL ESCHERICHIA COLI IN
PRETERM NEWBORN INFANTS" JOURNAL OF
PEDIATRICS, MOSBY-YEAR BOOK, ST. LOUIS,
MO, US, vol. 133, July 1998 (1998-07), pages
90-94, XP008000724 ISSN: 0022-3476**
• **STEIJNS JAN M: "Milk ingredients as
nutraceuticals." INTERNATIONAL JOURNAL OF
DAIRY TECHNOLOGY, vol. 54, no. 3, August 2001
(2001-08), pages 81-88, XP002409550 ISSN:
1364-727X**
• **KVISTGAARD A S ET AL: "Inhibitory effects of
human and bovine milk constituents on rotavirus
infections" JOURNAL OF DAIRY SCIENCE, vol.
87, no. 12, December 2004 (2004-12), pages
4088-4096, XP002409551 ISSN: 0022-0302**
• **CARLSON S E ET AL: "LOWER INCIDENCE OF
NECROTIZING ENTEROCOLITIS IN INFANTS
FED A PRETERM FORMULA WITH EGG
PHOSPHOLIPIDS" PEDIATRIC RESEARCH,
WILLIAMS AND WILKINS, BALTIMORE, MD,, US,
vol. 44, no. 4, October 1998 (1998-10), pages
491-498, XP000892677 ISSN: 0031-3998**
• **SANCHEZ-DIAZ A ET AL: "A CRITICAL
ANALYSIS OF TOTAL SIALIC ACID AND
SIALOGLYCOCONJUGATE CONTENTS OF
BOVINE MILK-BASED INFANT FORMULAS"
JOURNAL OF PEDIATRIC
GASTROENTEROLOGY AND NUTRITION,
RAVEN PRESS, NEW YORK, NY, US, vol. 24, no.
4, April 1997 (1997-04), pages 405-410,
XP008000726 ISSN: 0277-2116**

**Description**

**TECHNICAL FIELD**

The present invention relates to infant formulas enriched with and comprising select combinations of phospholipids, lactoferrin, gangliosides, and sialic acid, each of which is provided in whole or in part by an enriched whey protein concentrate, to better assimilate the natural composition and performance of human milk.

**BACKGROUND OF THE INVENTION**

Commercial infant formulas are commonly used today to provide supplemental or sole source nutrition early in life. These formulas comprise a range of nutrients to meet the nutritional needs of the growing infant, and typically include lipids, carbohydrates, protein, vitamins, minerals, and other nutrients helpful for optima! infant growth and development.

Commercial infant formulas are designed to assimilate, as closely as possible, the composition and function of human milk. In the United States, the Federal Food, Drug, and Cosmetic Act (FFDCA) defines infant formula as "a food which purports to be or is represented for special dietary use solely as a food for infants by reason of its simulation of human milk or its suitability as a complete or partial substitute for human milk." (FFDCA 201 (z)).

Commercial infant formulas, under FFDCA rules, are defined by basic nutrients that must be formulated into non-exempt infant formulas in the U.S. These nutrients include, per 100 kcal of formula: protein (1.8-4.5 g at least nutritionally equivalent to casein), fat (3.3-6.0g), linoleic acid (at least 300mg), vitamin A as retinol equivalents (75-225mcg), vitamin D (40-100 IU), vitamin K (at least 4.0 mcg), vitamin E (at least 0.7 IU/g linoieic acid), ascorbic acid (at least 8.0 mg), thiamine (at least 40 mcg), riboflavin (at least 60 mcg), pyridoxine (at least 35.0 mcg with 15 mcg/g of protein in formula), vitamin B12 (at least 0.15 mcg), niacin (at least 250 mcg), folic acid (at least 4.0 mcg), pantothenic acid (at least 300.0 mcg), biotin (at least 1.5 mcg), choline (at least 7.0 mg), inositol (at least 4.0 mg), calcium (at least 50.0 mg), phosphorous (at least 25.0 mg with calcium to phosphorous ratio of 1.1-2.0), magnesium (at least 6.0 mg), iron (at least 0.15 mg), iodine (at least 5.0 mcg), zinc (at least 0.5 mg), copper (at least 60.0 mcg), manganese (at least 5.0 mcg), sodium (20.0-60.0 mg), potassium (80.0-200.0 mg), and chloride (55.0-150.0 mg).

Notwithstanding tight regulatory controls, Commercial infant formulas are still not identical, in either composition or function, to human milk. Almost 200 different compounds have been identified in human milk, over 100 of which are still not typically found in significant amounts, or at all, in commercial formulas. Such compounds include various immunoglobulins, enzymes, hormones, certain proteins, lactoferrin, gangliosides, phospholipids (sphingomyeftn, phosphatidyl ethanolamine, phosphatidyl choline, phosphatidyl serine, phosphatidyl inositol), and so forth. Many of these materials are unique to human milk or are otherwise present in only minor concentrations in cow's milk or other protein sources used in preparing a commercial infant formula.

There is a continuing need, therefore, for new infant formulas that contain even more of the natural ingredients found in human milk, to thus potentially provide more of the nutritional benefits currently enjoyed by the breastfed infant

The present invention is directed to infant formulas with select concentrations and types of those compounds inherently found in human milk, including phospholipids, gangliosides, lactoferrin, and sialic acid. By virtue of these selected ingredients and their corresponding concentrations in the infant formulas, the nutrient profiles of the infant formulas described herein are more similar to human milk than are conventional infant formulas.

It was discovered that, in addition to assimilating some of the ingredients found in human milk, the infant formulas of the present invention also reduce the risk of diarrhea as demonstrated in an animal study described herein. The study shows a reduced duration of diarrhea in an animal model comparing the infant formula of the present invention to a commercial infant formula containing little or no lactoferrin, phospholipids, and gangliosides.

It was also discovered that the infant formulas of the present invention promote the development of a gut microflora profile similar to that found in formula fed infants, as demonstrated using in a validated dynamic, in-vitro model system of the large intestine developed by TNO Quality of Life (TNO Invitro Model or TIM-2). It is well known that breastfed and formula fed infants have significantly different gut microflora profiles, with that of the breast fed infant believed to be the healthier of the two.

**SUMMARY OF THE INVENTION**

A first embodiment of the present invention is directed to infant formulas comprising, on an as-fed basis (A) at least about 5 mg/L of gangliosides, (B) at least about 150 mg/L of phospholipids. (C) lactoferrin, and (D) at least about 70 mg/L of sialic acid, with at least about 2.5% by weight of the sialic acid as lipid-bound sialic acid. From about 50 to 100% by weight of each of the gangliosides, phospholipids, lactoferrin, and sialic acid is provided by an enriched whey protein concentrate, with the concentrate representing at least about 6.5 g/L of formula on an as-fed basis.

A second embodiment of the present invention is directed to a method of reducing the risk of diarrhea in an infant, including a method of reducing the duration of diarrhea in infants when so inflicted. The method comprises the administration to an infant in need thereof a formula comprising, on an as-fed basis (A) at least about 5 mg/L of gangliosides, (B) at least about 150 mg/L of phospholipids, (C) lactoferrin, and (D) at least about 70 mg/L of sialic acid, with at least about 2-5% by weight of the sialic acid as lipid-bound. From about 50 to 100% by weight of each of the gangliosides, phospholipids, lactoferrin, and sialic acid is provided by an enriched whey protein concentrate, with the concentrate representing at least about 6.5 g/L of formula on an as-fed basis.

A third embodiment of the present invention is directed to a method of promoting gut micro flora similar to that found in breast fed infants. The method comprises the administration to an infant in need thereof a formula comprising, on an as-fed basis (A) at least about 5 mg/L of gangliosides, (B) at least about 150 mg/L of phospholipids, and (C) lactoferrin, and (D) at least about 70 mg/L of sialic acid, wherein at least about 2.5% by weight of the sialic acid is lipid-bound. From about 50 to 100% by weight of each of the gangliosides, phospholipids, lactoferrin, and sialic acid are provided by an enriched whey protein concentrate, with the concentrate representing at least about 6.5 g/L of formula on an as-fed basis.

It was discovered that, in addition to assimilating some of the ingredients found in human milk, the infant formulas of the present invention also reduce the risk of diarrhea as demonstrated in an animal study described hereinafter. The study shows a reduced duration of diarrhea in an animal model comparing the infant formula of the present invention to a commercial infant formula.

It was also discovered that the infant formulas of the present invention promote the development of a gut microflora profile similar to that found in formula fed infants, as demonstrated using a TIM-2 System model. It is well known that breast-fed and formula fed infants have significantly different gut microflora profiles, with that of the breast fed infant believed to be the healthier of the two.

## BRIEF DESCRIPTION OF THE DRAWING

Fig. 1 is a pie chart summarizing the short chain fatty acid profile for a conventional infant formula with 0.5 g/L short chain FOS after 72 hr fermentation of breast-fed flora (Experiment I).

Fig. 2 is a pie chart summarizing the short chain fatty acid profile for a conventional infant formula with 2.0 g/L short chain FOS after 72 hr fermentation of breast-fed flora (Experiment 1).

Fig. 3 is a pie chart summarizing the short chain fatty acid profil for a conventional infant formulas with 2.0 g/L short and long chain FOS after 72 hr fermentation of breast-fed flora (Experiment 1).

Fig. 4 is a pie chart summarizing the short chain fatty acid profile for an infant formula embodiment of the present invention comprising 0.8 g/L short chain FOS after 72 hr fermentation of breast-fed flora (Experiment 1).

Fig. 5 is a pie chart summarizing the typical short chain fatty acid profile for breast-fed infants, resulting from fermentation by the microflora in the gut (Experiment 1).

Fig. 6 is a pie chart summarizing the typical short chain fatty acid profile for a conventional infant formula after 72 hr fermentation of breast-fed flora (Experiment 1).

Fig. 7 is a bar graph showing duration (days) of diarrhea in piglets fed either Diet A (commercial infant formula with conventional whey protein concentrate) or Diets B and C (infant formula with enriched whey protein concentrate at a level of 7.1 g/L of formula on an as-fed basis). Data are Mean $\pm$ SEM. (*) Significantly different from group A ($p<0.05$) (Experiment 2).

Fig. 8 is a bar graph showing duration (days) of diarrhea in piglets fed either Diets A and C (commercial infant formulas with conventional whey protein concentrate) or Diet B (infant formula with enriched whey protein concentrate at a level of 6.4 g/L of formula on an as-fed basis) (Experiment 3).

## DETAILED DESCRIPTION OF THE INVENTION

The compositions of the present invention comprise gangliosides, phospholipids, lactoferrin, and sialic acid, each of which is provided in whole or in part by an enriched whey protein concentrate, each of which is described in detail hereinafter.

The term "infant" as used herein refers to individuals not more than about one year of age, and includes infants from 0 to about 4 months of age, infants from about 4 to about 8 months of age, infants from about 8 to about 12 months of age, low birth weight infants at less than 2,500 grams at birth, and preterm infants born at less than about 37 weeks gestational age, typically from about 26 weeks to about 34 weeks gestational age.

The term "infant formula" as used herein, unless otherwise specified, refers to formulations comprising fat, protein, carbohydrates, vitamins, and minerals, and that are suitable for oral administration to infants as supplemental, primary, or sole sources of nutrition, non limiting examples of which include reconstitutable powders, dilutable concentrates, and ready-to-feed liquids.

The term "as fed' as used herein, unless otherwise specified, refers to liquid formulas suitable for direct oral administration to an infant, wherein the formulas are ready-to-feed liquids, reconstituted powders, or diluted concentrates.

All ingredient ranges as used herein, unless otherwise specified, used to characterize the infant formulas of the present invention are by weight of the infant formula on an as-fed basis.

All percentages, parts and ratios as used herein are by weight of the total composition, unless otherwise specified. All such weights as they pertain to listed ingredients are based on the active level and, therefore, do not include solvents or by-products that may be included in commercially available materials, unless otherwise specified.

The infant formulas of the present invention may also be substantially free of any optional or selected essential ingredient or feature described herein, provided that the remaining formula still contains all of the required ingredients or features as described herein. In this context, and unless otherwise specified, the term "substantial free" means that the selected composition contains less than a functional amount of the optional ingredient, typically less than 0.1% by weight, and also including zero percent by weight of such optional or selected essential ingredient.

All references to singular characteristics or limitations of the present invention stall include the corresponding plural characteristic or limitation, and vice versa, sunless otherwise specified or clearly implied to the contrary by the context in which the reference is made.

All combinations of method or process steps as used herein can be performed in any order, unless otherwise specified or clearly implied to the contrary by the context in which the referenced combination is made.

The methods and compositions of the present invention, including components thereof, can comprise, consist of, or consist essentially of the essential elements and limitations of the invention described herein, as well as any additional or optional ingredients, components, or limitations described herein or otherwise useful in nutritional formula applications.

## Enriches Whey Proteins Concentrate

The infant formulas of the present invention comprise selected levels of enriched whey protein concentrates that provide, in whole or in part, the ganglioside, lactoferrin, phospholipid, and sialic acid components in the formula. The enriched whey protein concentrate may provide from about 10% to 100%, including from about 50% to about 100%, also including from about 50% to about 90%, and also including from about 60% to about 85%, by weight, of each of the total phospholipid, gangliosides, lactoferrin, and sialic acid levels in the infant formula. Although the latter compounds can be added individually and separately, as isolated compounds from mammalian milk or other suitable sources, it is preferred that most if not all of such compounds be provided by the enriched whey protein concentrate.

The level of enriched whey protein concentrate in the infant formula must exceed about 6.5 g/L of formula, on an as-fed basis. Such concentrations may also range from about 6.5 to about 10.9 g/L, including from about 6.6 to about 8.5 g/L, and also including from about 6.7 to about 7.3 g/L, of the formula, on an as fed basis.

The enriched whey protein concentrates for use in the infant formulas of the present invention are those having a high concentration of milk fat globule membrane materials. Milk fat globule membrane materials are the membrane and membrane-associated materials that surround the triacylglycerol-rich milk fat globules in bovine or other mammalian milk. Many of the compounds identified in the milk fat globule membrane materials are present in much higher concentrations in human milk than in commercial infant formulas. By adding whey protein concentrates enriched in such materials to an infant formula, the resulting formula is more similar in composition to human milk, especially with respect to human milk concentrations of gangliosides, phospholipids, lactoferrin, and sialic acid.

The term "enriched whey protein concentrate" as used herein, unless otherwise specified, refers generally to any whey protein concentrate having at least about 3%, more typically at least about 5%, by wight of phospholipids, of which at least about 20% by weight of sphingomyelin; at least about 0.5%, typically at least about 1.2% by weight of a sialic acid; and at least about 0.05%, typically at least about 0.1%, by weight of gangliosides. At least about 2.5% by weight of the sialic acid from the concentrate is lipid-bound.

Suitable sources of enriched whey protein concentrate for use herein include any whey protein concentrate having the above-described levels of enriched ingredients, non-limiting examples of which include LACPRODAN® MFGM-10, Whey Protein Concentrate, available from Aria Food ingredients. Denmark, which contains 6.5% phospholipids, 0.2% gangliosides, 1.80% sialic acid (at least 2.5% lipid-bound sialic acid by weight of total sialic acid), and 1.5% lactoferrin, by weight of the concentrate.

## Sialic Acid

The infant formulas of the present invention comprise sialic acid at a concentration, on an as fed basis, of at least 70 mg/L, including from about 90 mg/L to about 4000 mg/l, also including from about 190 mg/liter to about 2000 mg/l, also including from about 300 mg/L to about 900 mg/L, with at least 2.5%, including from about 2.6% to about 10%, including from about 2.7% to about 5%, by weight of the sialic acid as lipid-bound. Some or all of the sialic acid may be provided by the enriched whey protein concentrate as described herein.

The lipid-bound sialic acid component of the infant formula is most typically in the form of a ganglioside, which inherently contain lipid-bound sialic acid. The ganglioside component of the present invention, as described hereinafter, may therefore be a primary or sole source of the lipid-bound sialic acid component of the present invention.

The term "sialic acid" as used herein, unless otherwise specified, refers to all conjugated and non-conjugated forms of sialic acid, including sialic acid derivatives. The sialic acid in the infant formula of the present invention may therefore includes free sialic acid, protein-bound sialic acid, lipid-bound sialic acid (including gangliosides), carbohydrate-bound sialic acid, and combinations or derivatives thereof. All sialic acid concentrations described herein are based upon the weight percentage of the sialic acid compound or moiety itself, less protein, lipid, carbohydrate, or other conjugates bound to the sialic acid structure.

Sialic acid sources for use in the infant formulas may be added or obtained as separate ingredients. More typically, however, the sialic acid is provided primarily as an inherent ingredient from a whey protein concentrate component, preferably from an enriched whey protein concentrate as described herein. Although less preferred, sialic acid may be obtained from and added as a separate ingredient to the infant formula, in which case the added sialic acid is combined with inherent sialic acid from other ingredients to provide the total sialic acid content in the infant formula.

As an individual compound or moiety, sialic acid is a 9 carbon amino sugar, the structure of which is readily described in the chemical literature. Other generally accepted names for N-acetylneuraminic acid include sialic acid; o-Sialic acid; 5-Acetamido-3.5-dideoxy-D-glycero-D-gafacto-2-nonulosonic acid; 5-Acetamido-3,5-dideoxy-D-glycero-D-galactonulosanic acid; Aceneuramic acid; N-acetyl-neuraminate; N-Acetylneuraminic acid; NANA; NANA, Neu5Ac; and Neu5Ac.

Suitable sialic acid sources may be either natural or synthetic, and include any of the more than 40 naturally occurring and currently identified sialic acid derivatives, which includes free sialic acid, oligosaccharide conjugates (e.g. sialyloligosaccharides), lipid conjugates (i.e., glycolipids), protein conjugates (i.e., glycoproteins), and combinations thereof.

Sialic acid suitable for use herein includes sialyloligosaccharides commonly found in human milk, whether natural or synthetic, the two most abundant of which are 3'sialyllactose (3'SL, NeuNAca2-3Galactoseβ1-4Glucose) and 6'sialyllactose (6'SL, NeuNAca2-6Galactoseβ1-4Glucose). Other suitable sialyloligosaccharides include those that contain one or more sialic acid molecules conjugated to larger human milk or other more complex oligosaccharides.

Other suitable sialic acids for use herein include any corresponding glycolipid that is also suitable for use in an infant formula, including gangliosides such as sialic acid-containing glycolipids comprising a fatty acid, sphingosine, glucose, galactose, N-acetylgaiactosamine. N-acetylgiucosamine, and N-acetylneuraminic acid molecule. These sialic acid compounds may also include any one or more of the several glycoproteins commonly found in human milk that are known to be sialytated (e.g., κ-casein, α-lacialbumin, lactoferrin).

Suitable sources of sialic acid for use herein include isolates, concentrates, or extracts of mammalian milk or milk products, including human and bovine milk. Bovine milk is a preferred source for use herein, including enriched whey protein concentrates as described herein.

Individual sources of sialic acid suitable for use herein includes Lacprodan CGMP-10 (caseino glyco maeropeptide with 4.2% sialic acid), available from ArlaFood Ingredients, Denmark; and Biopure glyco macropeptide (with 7-8% sialic acid), available from Davisco Foods International, Eden Prairie, Minnesota, USA.

Although the infant formulas may comprise glycomacropeptides as a source of sialic acid, the formulas are preferably substantially reduced in glycomacropeptide content. Glycomacropeptide is part of the bovine milk protein casein molecule. Only very small amounts of free glycomacropeptide are found in skim milk, but whey protein concentrate contains higher amounts of free glycomacropeptide. It has been found that glycomacropeptides are not tolerated by infants as well as other sialic acid sources. Thus, infant formulas made with whey protein concentrate have higher free glycomacropeptide content, but also could be less well tolerated by the infant. In this context, the term "substantially reduced" means that the infant formulas preferably contain less than 0.5%, including less than 0.4%, and also including less than 0.35%, and also including zero percent, by weight of the formula as free glycomacropeptide on an as-fed basis. Conventional infant formulas typically contain from 0.6 to 0.8% glycomacropeptide as an inherent ingredient from a typical whey protein concentrate from cheese whey.

## Gangliosides

The infant formulas of the present invention comprise enriched concentrations of one or more gangliosides, a group of compounds composed of a glycosphingolipid (ceramide and oligosaccharide) with one or more sialic acids (n-acetylneuraminic acid) linked to the oligosaccharide chain. Some or all of the gangliosides may be provided by the enriched whey protein concentrate as described herein.

Gangliosides are normal components of plasma membranes of mammalian cells and are particularly abundant in neuronal membranes. They are acidic glycasphingolipids comprising a hydrophobic portion, the ceramide, and a hydrophilic portion, an oligosaccharide chain containing one or more molecules of sialic acid. The oligosaccharide moieties of the gangliosides have different chemical structures constituting the reference basis for gangliosides separation and their recognition as individual entities. The ceramide moiety of the most common gangliosides has a heterogeneous fatty acid composition with a prevalence of G18 and C20 derivatives.

Gangliosides are most commonly named using M, D and T designations, which refer to mono-, di- and trisialogangliosides, respectively, and the numbers 1, 2, 3, etc refer to the order of migration of the gangliosides on thin-layer chromatography. For example, the order of migration of monosialogangliosides is GM3 > GM2 > GM1. To indicate variations within the basic structures, further subscripts are added, e.g. GM1a. GD1b, etc.

The infant formulas of the present invention comprise at least about 5 mg/L of gangliosides, including from about 7 mg/L to 50 mg/L. also including from about 10 to about 30 mg/L. These ganglioside concentrations are similar to that found in human milk, which typically contains at least about 3 mg/L of gangliosides, more typically from about 3 mg/L to about 30 mg/L of gangliosides. These gangliosides for use in the infant formulas typically comprise one or more, more typically all, of the gangliosides GD3, O-Acetyl-GD3 and GM3. These gangliosides generally represent at least about 80%, more typically at least about 90%, by weight of the total gangliosides in the infant formula herein.

Suitable sources of gangliosides for use herein include isolates, concentrates, or extracts of mammalian milk or milk products, including human and bovine milk. Bovine milk is a preferred ganglioside source for use herein, including enriched whey protein concentrates as described herein.

Individual sources of gangliosides suitable for use herein include Ganglioside 500 ( >0.5% GM3 and <1.0% GD3) and Ganglioside 600 (>1.2% GD3), available from Fonterra, New Zealand.

Ganglioside concentration for purposes of defiling the infant formulas of the present invention are measured in accordance with the gangliosides method described hereinafter.

## Phospholipids

The infant formulas of the present invention comprise enriched concentrations of phospholipids. Such concentrations are higher than that found in conventional infant formulas but similar to that found in human milk. Some or all of the phospholipids may be provided by the enriched whey protein concentrate as described herein.

Phospholipid suitable for use herein include those commonly found in bovine and other mammalian milk. Preferred phospholipids include sphingomyelin, phosphatidyl ethanolamine, phosphatidyl choline, phosphatidyl inositol, phosphatidyl serine, and combinations thereof. Most preferred are combinations of all five phospholipids, especially such combinations in which sphingomyelin represents at least 20% by weight of total phospholipids.

Phospholipid concentrations in the infant formulas of the present invention are at least about 150 mg/L, including from about 200 mg/L to about 600 mg/L, also including from about 250 to about 450 mg/L. Human milk, for comparison, generally contains from about 163 to about 404 mg/L of phospholipids, with sphingomyelin representing about 51 % of the total phospholipids.

Suitable sources of phospholipids for use herein include isolates, concentrates, or extracts of mammalian milk or milk products, including human and bovine milk. Bovine milk is a preferred phospholipid source for use herein, including enriched whey protein concentrates as described herein.

Other suitable phospholipid sources include soy, such as soy lecithin. The infant formulas of the present invention, however, are preferably substantially free of phospholids from soy. The infant formulas are also preferrably substantially free of egg phospholipids, which is also referred to as egg lecithin. In this context, the term "substantially free" means that the infant formulas contain less than 0.5%, more preferably less than 0.1%, including zero percent, by weight of soy or egg phospholipids.

Individual sources of phospholipids suitable for use herein include milk derived sources such as Phospholipid concentrate 600 (>18.0% Sphingomyelin, >36.0% Phosphatidyl Choline, >9.0% Phosphatidyl Ethanolamine, 4.0% Phosphatidylserine), available from Fonterra, New Zealand.

## Lactoferrin

The infant formulas of the present invention comprise lactoferrin, an iron transport protein found in human milk.

These formulas contain enriched concentrations of lactoferrin at levels higher than that found in conventional infant formulas. Some or all of the lactoferrin may be provided by an enriched whey protein concentrate as described herein.

The term "lactoferrin" as used herein includes both denatured lactoferrin and large, biologically active fragments of lactoferrin (e.g., lactoferrin fragments) and undenatured or natural lactoferrin. Lactoferrin is a glycoprotein that belongs to the iron transporter or transferrin family. It is found in bovine and other mammalian milk as a minor protein component of whey proteins. Lactoferrin contains 703 amino acids, has a molecular weight of 80 kilodaltons, and is also found in human milk.

The term "native lactoferrin" as used herein refers to lactoferrin that is not aggregated with other proteins or lipids. Native lactoferrin may, however, be bound to iron or other minerals.

Lactoferrin concentrations in the infant formulas of the present invention are preferably at least about 50 mg/L, including from about 50 mg/L to about 2000 mg/L, including from about 100 to about 1500 mg/L, with preferably at least about 6% by weight, including from about 6 to about 30%, and also including from about 7 to 14%, of the lactoferrin as native lactoferrin. Human milk, by comparison, generally contains from about 1390 to about 1940 mg/L of lactoferrin.

Suitable sources of lactoferrin for use herein include isolates, concentrates,or extracts of mammalian milk or milk products, including human and bovine milk. Bovine milk is a preferred lactoferrin source for use herein, including enriched whey protein concentrates as described herein.

Individual sources of lactoferrin suitable for use herein include Lactoferrin FD (80% Lactoferrin), available from DMV International, Veghel, The Netherlands.

## Other Nutrients

The infant formulas of the present invention comprise fat, protein, carbohydrate, vitamins and minerals, all of which are selected in kind and amount to meet the sole, primary, or supplemental nutrition needs of the targeted infant or defined infant population. Many different sources and types of carbohydrates, fats, proteins, minerals and vitamins are known and can be used in the base formulas herein, provided that such nutrients are compatible with the added ingredients in the selected formulation and are otherwise suitable for use in an infant formula.

Carbohydrates suitable for use in the formulas herein may be simple or complex, lactose-containing or lactose-free, or combinations thereof, non-limiting examples of which include hydrolyzed, intact, naturally and/or chemically modified cornstarch, maltodextrin, glucose polymers, sucrose, corn syrup, corn syrup solids, rice or potato derived carbohydrate, glucose, fructose, lactose, high fructose corn syrup and indigestible oligosaccharides such as fructooligosaccharides (FOS), galactooligosaccharides (GOS), and combinations thereof.

Proteins suitable for use in the formulas herein include hydrolyzed, partially hydrolyzed, and non-hydrolyzed or intact proteins or protein sources, and can be derived from any known or otherwise suitable source such as milk (e.g., casein, whey, human milk protein), animal (e.g., meat, fish), cereal (e.g., rice, corn), vegetable (e.g., soy), or combinations thereof.

Proteins for use herein may also include, or be entirely or partially replaced by, free amino acids known for or otherwise suitable for use in infant formulas, non-limiting examples of which include alanine, arginine, asparagine, carnitine, aspartic acid, cystine, glutamic acid, glutamine, glycine, histidine, isoleucine, leucine, lysine, methionine, phenylalanine, proline, serine, taurine, threonine, tryptophan, taurine, tyrosine, valine, and combinations thereof. These amino acids are most typically used in their L-forms, although the corresponding D-isomers may also be used when nutritionally equivalent. Racemic or isomeric mixtures may also be used.

Fats suitable for use in the formulas herein include coconut oil, soy oil, corn oil, olive oil, safflower oil, high oleic safflower oil, algal oil, MCT oil (medium chain triglycerides), sunflower oil, high oleic sunflower oil, palm and palm kernel oils, palm olein, canola oil, marine oils, cottonseed oils, and combinations thereof. The infant formulas of the present invention include those embodiments comprising less than about 1%, including less than about 0.2%, also including zero percent, by weight of milk fat on an as-fed basis.

Vitamins and similar other ingredients suitable for use in the formulas include vitamin A, vitamin D, vitamin E, vitamin K, thiamine, riboflavin, pyridoxine, vitamin B12, niacin, folic acid, pantothenic acid, biotin, vitamin C, choline, inositol, salts and derivatives thereof, and combinations thereof.

Minerals suitable for use in the base formulas include calcium, phosphorus, magnesium, iron, zinc, manganese, copper, chromium, iodine, sodium, potassium, chloride, and combinations thereof.

The infant nutrition formulas of the present invention preferably comprise nutrients in accordance with the relevant infant formula guidelines for the targeted consumer or user population, an examples of which would be the Infant Formula Act, 21 U.S.C. Section 350(a). Preferred carbohydrate, lipid, and protein concentrations for use in the formulas are set fourth in the following table.

Table 1: Macronutrient Ranges

| Nutrient | Range[1] | gum/100 kcal | gm/100 gm powder | gm/liter as fed |
|---|---|---|---|---|
| Carbohydrate | Preferred | 8-16 | 30-90 | 54-108 |
| | More preferred | 9-13 | 45-60 | 61-88 |
| Lipid | Preferred | 3-8 | 15-35 | 20-54 |
| | More preferred | 4-6.6 | 25-25 | 27-45 |
| Protein | Preferred | 1-3.5 | 8-17 | 7-24 |
| | More preferred | 1.5-3.4 | 10-17 | 10-23 |
| 1. All numerical values are preferably modified by the term "about" | | | | |

The infant formulas may also include per 100 kcal of formula one or more of the following: vitamin A (from about 250 to about 750 IU), vitamin D (from about 40 to about 100 IU), vitamin K (greater than about 4 $\mu$m), vitamin E (at least about 0.3 IU), vitamin C (at least about 8 mg), thiamine (at least about 8 $\mu$g), vitamin B12 (at least about 0.15 $\mu$g), niacin (at least about 250 $\mu$g), folic acid (at least about 4 $\mu$g), pantothenic acid (at least about 300 $\mu$g), biotin (at least about 1.5 $\mu$g), choline (at least about 7 mg), and inositol (at least about 2 mg).

The infant formulas may also include per 100 kcal of formula one or more of the following: calcium (at least about 50 mg), phosphorus (at least about 25 mg), magnesium (at least about 6 mg), iron (at least about 0.15 mg), iodine (at least about 5 $\mu$g), zinc (at least about 0.5 mg), copper (at least about 60 $\mu$g), manganese (at least about 5 $\mu$g), sodium (from about 20 to about 60 mg), potassium (from about 80 to about 200 mg), chloride (from about 55 to about 150 mg) and selenium (at least about 0.5 mcg).

The infant formulas may further comprise fructopolysaccharides, concentrations of which may range up to about 5% by weight of the formula, on an as fed basis, including from about 0.05% to about 3%, and also including from about 0.1% to about 2%. These fructopolysaccharides may be long chain (e.g., insulin), short chain (e.g., FOS or fructooligosaccharides), or combinations thereof, with mixtures comprising varied chain length structures, most of which have a DP (degree polymerization) of from about 2 to about 60.

The infant formulas of the present invention may further comprise polyunsaturated fatty acids such as docosahexaenoic acid, arachidonic acid, or combinations thereof. Any source of such long chain polyunsaturated fatty acids is suitable for use herein, provided that such source is safe and effective for use in infants, and is otherwise compatible with the other selected ingredient in the infant formula. Arachidonic acid concentrations in the infant formulas of the present invention may range up to about 2.0%, more preferably from about 0.1% to about 1.0%, even more preferably from about 0.15 to about 0.7%, including from about 0.2% to about 0.45%, also including from about 0.38% to about 0.43%, by weight of the total fatty acids in the formula. Docosahexaenoic acid concentrations in the infant formulas of the present invention may range up to about 1.0%, including from about 0.09% to about 1.0%, also including from about 0.1% to about 0.36%, by weight of the total fatty acids in the formula. Non-limiting examples of some suitable sources of arachidonic acid, and/or docosahexaenoic acid include marine oil, egg derived oils, fungal oil, algal oil, other single cell oils, and combinations thereof.

The infant formulas may further comprise other optional ingredients that may modify the physical, chemical, aesthetic or processing characteristics of the compositions or serve as pharmaceutical or additional nutritional components when used in the targeted infant or infant population. Many such optional ingredients are known or are otherwise suitable for use in nutritional products and may also be used in the infant formulas of the present invention, provided that such optional materials are compatible with the essential materials described herein and are otherwise suitable for use in an infant formula.

Non-limiting examples of such optional ingredients include additional anti-oxidants, emulsifying agents, buffers, colorants, flavors, nucleotides and nucleosides, probiotics, prebiotics, and related derivatives, thickening agents and stabilizers, and so forth.

## Method of Use

The present invention is also directed to a method of reducing the risk of diarrhea in an infant, including reducing such risk by reducing the duration of diarrhea in an infant prone to the development of or so inflicted by diarrhea, by preparing and then administering or instructing a caregiver to administer the infant formulas to an infant as a sole source, primary source, or supplemental source of nutrition. Sole source nutrition is preferred.

The present invention is also directed to a method of producing a gut microflora profile similar to that found in breast-fed infants, by preparing the infant formulas as described herein and then administering or instructing a caregiver to administer the formula to an infant as a sole source, primary source, or supplemental source of nutrition. Sole source nutrition is preferred.

The present invention is also directed to a method of providing nutrition to an infant by preparing the infant formulas as described herein and then administering or instructing a caregiver to administer the formula to an infant as a sole source, primary source, or supplemental source of nutrition. Sole source nutrition is preferred.

In the context of the methods of the present invention, the infant formulas may provide infants with sole, primary, or supplemental nutrition. For powder embodiments, each method may also include the step of reconstituting the powder with an aqueous vehicle, most typically water or human milk, to form the desired caloric density, which is then orally or enterally fed to the infant to provide the desired nutrition. The powder is reconstituted with a quantity of water, or other suitable fluid such as human milk, to produce a volume and nutrition profile suitable for about one feeding.

The infant formulas of the present invention will most typically have a caloric density of from about 19 to about 24 kcal/fl oz, more typically from about 20 to about 21 kcal/fl oz, on an as fed basis.

## Ganglioside Analytical Method

Ganglioside concentrations for use herein are determined in accordance with the following analytical method.

Total lipids are extracted from Lacprodan MFGM-10 or infant formula samples with a mixture of chloroform: methanol:water. Gangliosides are purified from the total lipid extract by a combination of diisopropyl ether (DIPE)/1-butanol/aqueous phase partition and solid phase extraction through C-18 cartridges. Lipid-bound sialic acid (LBSA) in the purified gangliosides is measured spectrophotometrically by reaction with resorcinol. The amount of gangliosides in the samples is obtained by multiplying LBSA by a conversion factor. This factor is obtained from the molecular weight ratio of gangliosides and sialic acid units. Because gangliosides are a family of compounds with different molecular weights and number of sialic acid residues, HPLC separation is used to measure individual ganglioside distribution in order to calculate this conversion factor more accurately.

## Standards

- Disialoganglioside GD1a, from bovine brain, min. 95% (TLC) SIGMA, ref G-2392.
- Monosialoruanglioside GM1, from bovine brain, min. 95% (TLC) SIGMA, ref G-7641.
- Disialoganglioside GD3 ammonium salt, from bovine buttermilk, min. 98% (TLC) Calbiochem, ref 345752 or Matreya, ref. 1503.
- Monosialoganglioside GM3 ammonium salt, from bovine milk, min. 98% (TLC) Calbiochem, ref 345733 or Matreya, ref. 1504.
- N-acetytneuraminic acid, (sialic acid, NANA) from Escherichia coli, min. 98% SIGMA, ref A-2388.

Ganglioside standards are not considered as true standards since suppliers don't typically guarantee their concentrations. For this reason, concentrations are estimated as LBSA measured by the resorcinol procedure. The standards are diluted with chloroform:methanol (C:M)1:1 (v/v) to a theoretical concentration of 1-2.5 mg/ml depending on the type of ganglioside. Aliquots of 10, 20 and 40 $\mu$l are taken, brought to dryness under $N_2$ stream and measured as explained below (Measurement of LBSA). An average concentration of the three aliquots is considered as concentration of ganglioside standards expressed as LBSA. Ganglioside concentration is obtained by multiplying LBSA by a conversion factor obtained from molecular weight ratios (Conversion factor: $\dfrac{Ganglioside\ MW}{n \times Sialic\ acid\ MW}$ where n=number of sialic acid units).

## Reagents

- Chloroform, HPLC grade, Prolabo.
- Methanol, HPLC grade, Merck.
- Diisopropyl ether, HPLC grade, Prolabo.
- Butyl acetate, PA, Merck.
- 1-Butanol, PA, Merck.

- Sodium dibasic phosphate, PA, Panreac.
- Hydrochloric acid 35%, PA, Panreac.
- Copper sulphate, PA, Panreac.
- Resorcinol, 99%, Merck.
- Sodium chloride, PA, Panreac.

## Equipment

- Analytical balance, with a precision of 0,1 mg.
- HPLC vials, screws cap and inserts from Waters.
- Micro syringes Hamilton (50, 100, 250, 500, 1000 μl).
- HPLC: Alliance 2690 from Waters.
- HPLC UV Detector, reference number 2487, from Waters.
- HPLC integrator Waters Millennium 32.
- Solvac Filter Holder (polypropylene), ref. No. 4020.
- Durapore membrane filters of 0.45 μm, ref. No. VLP04700
- Multi-reax Vortex (Heidolph)
- Digital pipettes (2-20, 5-50, 40-200, 200-1000 μl)
- Glass round-bottom 10ml centrifuge tube
- Glass round-bottom 50ml centrifuge tube
- Class conic-bottom 40ml centrifuge tube
- 500 mg C-18 cartridges (5 ml, ref 52604-U, Supelco)
- Reacti-Vap III evaporator 27-port model (Pierce)
- Centrifuge
- Ultrasonic bath
- SPE-Vacuum manifolds 24-port model
- Diaphragm vacuum pump
- Triple-Block Reacti-Therm III (Pierce)
- Water-vacuum pump
- Glass Pasteur pipette
- Organic solvent dispenser (2.5-25 ml)
- Vortex (Heidolph)
- Water bath 40-100°C.
- Class pipettes (5, 10, 25 ml).
- Spectrophotometer (ThermoSpectronic UV500).

## Procedure

Lipid Extraction: lipid extracts are prepared as follows: samples of 1 g of formula or 100 mg of Lacprodan MFGM-10 are weighed into round-bottom glass centrifuge tubes (50 ml tubes for formula and 10 ml tubes for Lacprodan MFGM-10). Twenty-five ml chloroform:methanol:water (C:M:W) 50:50:10 (v/v) per g of sample are added, being samples completely dispersed by alternative vortexing and sonication for 1 min. Tubes are incubated for 45 min at room temperature with vigorous and continuous vortexing (2000 rpm) with bath sonication pulses of 1 min every 15 min. Samples are centrifuged (1500 x g, 10 min, 15 °C). The supernatants are transferred to 40 ml conical-bottom glass centrifuge tubes and started to bring to dryness under $N_2$ at 37°C. Meanwhile, the pellets are reextracted with 12.5 ml of C:M:W per g for 15 min at room temperature with continuous vortexing (2000 rpm) and with bath sonication pulses of 1 min every 7.5 min. After centrifugation, the supernatants are pooled with the first ones in the 40 ml tubes and the evaporation continued. The pellets are washed with C:M 1:1 (v/v) and incubated 10 min in the same conditions than before, with sonication pulses every 5 min. After centrifugation, the supernatants are also added to the 40 ml tubes and evaporated.

The ganglioside fraction is purified from the total lipid extract by a combination of the diisopropyl ether (DIPE) /1-butanol/aqueous phase partition described by Ladisch S. and Gillard B. (1985) A solvent partition method for microscale ganglioside purification, Anal. Biochem, 146:220-231. This is followed by solid phase extraction through C-18 cartridges as described by Williams M and McCluer R (1980), The use of Sep-PakTM C18 cartridges during the isolation of gangliosides, J. Neurochem, 35:266-269 with modifications.

Diisopropyl ether/1-ButanolAgueous NaCl partition: 4 ml of DIPE/1-butanol 60:40 (v/v) are added to the dried lipid extract. Samples are vortexed and sonicated to achieve fine suspension of the lipid extract. Two ml of 0.1 % aqueous NaCl are added, and the tubes alternately vortexed and sonicated for 15 second pulses during 2 min, and then centrifuged (1500 x g, 10 min, 15°C). The upper organic phase (containing the neutral lipids and phospholipids) is carefully removed using a Pasteur pipette taking care of not removing the interphase. The lower-aqueous phase containing gangliosides is extracted twice with the original volume of fresh organic solvent. The samples are partially evaporated under a stream of $N_2$ at 37°C during 30-45 min until the volume (nearly 2 ml) is reduced to approximately one half of the original volume.

<u>Solid Phase Extraction (SPE) through reversed-phase C-18 cartridges</u>: 500 mg C-18 cartridges are fitted to a twenty four-port liner SPE vacuum manifold and activated with three consecutive washes of 5 ml of methanol, 5 ml of C:M 2:1 (v/v) and 2.5 ml of methanol. Then, cartridges are equilibrated with 2.5 ml of 0.1% aqueous NaCl:methanol 60:40 (v/v). The volumes of partially evaporated lower phases are measured, brought up to 1,2 ml with water, and added with 0.8 ml methanol. Then, they are centrifuged (1500 x g, 10 min) to remove any insoluble material and loaded twice onto C-18 cartridges. SPE cartridges are swished with 10 ml of distilled water to remove salts and water-soluble contaminants and then, dried 30 seconds under vacuum. Gangliosides are eluted with 5 ml of methanol and 5 ml of C:M 2:1 (v/v), dried under a stream of $N_2$ and redissolved in 2 ml of C:M 1:1 (v/v). Samples and solvents are passed through the cartridges by gravity or forced by weak vacuum with a flow rate of 1-1.5 ml/min. Gangliosides are stored at -30°C until analysis. Total gangliosides are measured as LBSA. An aliquot of 500 μl is placed into a 10 ml glass centrifuge tube, dried under N2, and measured by resorcinol assay (3).

<u>Measurement of LBSA</u>: 1 ml of the resorcinol reagent and 1 ml of water are added. The tubes are cupped and heated for 15 min at 100°C in a boiling water bath. After heating, the tubes are cooled in a ice-bath water, 2ml of butyl acetate:butanol 85:15 (v/v) are added, the tubes are sacked vigorously for 1 min and then centrifuged at 750 x g for 10 min. The upper phases are taken and measured at 580 nm in a spectrophotometer Standard solutions of NANA (0, 2, 4, 8, 16, 32 and 64 μg/ml) are treated the same way and are used to calculate the sialic acid concentration in samples.

The resorcinol reagent is prepared as follows: 10 ml of resorcinol at 2% in deionised water, 0.25 ml of 0.1 M copper sulphate, 80 ml of concentrated hydrochloric acid, complete up to 100 ml with water. The reagent is prepared daily protected from light.

<u>Separation of gangliosides by HPLC</u>: gangliosides are separated by HPLC in a Alliance 2690 equipment with Dual Absorbance Detector, from Waters using a Luna-NH2 column, 5 μm, 100 A, 250 x 4.6 mm from Phenomenex, ref. 00G-4378-EO. They are eluted at room temperature with the following solvent system: acetonitrile-phosphate buffer at different volume ratios and ionic strengths according to the method of Gazzotti G., Sonnion S., Ghidonia R (1985), Normal-phase high-performance liquid chromatographic separation of non-derivatized ganglioside mixtures. J Chromatogr. 348:371-378.

A gradient with two mobile phases is used:

- Solvent A: Acetonitrile - 5mM phosphate buffer, pH 5.6 (83:17). This buffer is prepared with 0.6899 g NaH2PO4.H2O to 1L water, pH adjusted to 5.6
- Solvent B: Acetonitrile - 20mM phosphate buffer, pH 5.6 (1:1). This buffer is prepared with 2.7560 g NaH2PO4.H2O to 1L water, pH adjusted to 5.6

The following gradient elution program is used:

| Time (min) | Flow (ml/min) | % A | % B |
|---|---|---|---|
| 0 | 1 | 100 | 0 |
| 7 | 1 | 100 | 0 |
| 60 | 1 | 66 | 34 |
| 61 | 1 | 0 | 100 |
| 71 | 1 | 0 | 100 |
| 72 | 1 | 100 | 0 |
| 85 | 1 | 100 | 0 |

Samples are liquid-phase extracted, partitioned and solid-phase extracted as explained above. An aliquot of 0.5 ml from the 2 ml sample in C:M 1:1 is evaporated under nitrogen and redissolved into 0.150 ml of water. For perfect reconstitution, the sample is vortexed and sonicated. The final solution is transferred to an HPLC vial. The injection volume is 30 μl for samples and standards.

GD3 and GM3 standards are measured by the resorcinol procedure and true concentrations calculated as explained above. Four standard solutions containing GD3 and GM3, and a blank are prepared in water. The concentrations of the calibration standards ranged approximately from 0-0.5 mg/ml for GD3 and from 0-0.2 mg/ml for GM3. The exact concentration of each set of standards may vary depending on the purity of the standards.

A set of standards is injected each time the system is set-up, e.g., for a new column. The proper performance of the system is checked by injecting one standard of intermediate concentration every ten runs. If the interpolated concentration is not between 95%-105% of the theoretical concentration, a new calibration set is injected and used for subsequent calculations.

## Native Lactoferrin Analytical Method

Native Lactoferrin concentrations for use herein are determined in accordance with the HPLC method described herein (size exclusion chromatography). The test parameters are, for example, as follows:

- Columns (2 in series): Shodex KW-804 (Waters #36613) and Shodex KW-803 (Waters #35946)
- Mobile Phase: 525 mL Milli-Q Plus H2O, 475 mL acetonitrile, 0.5 mL trifluoroacetic acid
- Flow Rate: 0.2 mL/minute
- Temperature: 40C
- Detection: UV at 205 nm, 214 nm, 280 nm
- Injection: 2.0 uL
- Run Tme: 150 minutes
- LF Standard Range: 20 - 80 mg/L
- WPC Sample Prep: ~1.0 mg/mL in mobile phase

## Method of Manufacture

The infant formulas of the present invention may be prepared by any known or otherwise effective technique, suitable for making and formulating infant or similar other formulas. Such techniques and variations thereof for any given formula are easily determined and applied by one of ordinary skill in the infant nutrition formulation or manufacturing arts in the preparation of the formulas described herein.

Methods of manufacturing the infant formulas of the present invention may include formation of a slurry from one or more solutions which may contain water and one or more of the following: carbohydrates, proteins, lipids, stabilizers, vitamins and minerals. This slurry is emulsified, homogenized and cooled. Various other solutions, mixtures or other materials may be added to the resulting emulsion before, during, or after further processing. This emulsion may then be further diluted, sterilized, and packaged to form a ready-to-feed or concentrated liquid, or it can be sterilized and subsequently processed and packaged as a reconstitutable powder (e.g., spray dried, dry mixed, agglomerate).

Other suitable methods for making infant formulas are described, for example, in U.S. Patent 6,365,218 (Borschel) and U.S. Patent Application 20030118703 A1 (Nguyen, et al.), which descriptions are incorporated herein by reference.

## EXPERIMENT I

The purpose of this experiment is to assess the effects of the infant formulas of the present invention on gut microflora, and compare those effects to that produced from human milk. This is accomplished by measuring short chain fatty acid concentrations resulting from human milk and infant formulas using a validated large intestine model system.

It is well known that the gut microflora profile of breastfed infants is different from that of formula-fed infants. And since gut microflora are responsible for affecting the production of short chain fatty acids in the gut, the difference between the gut microflora profile of breast fed and formula fed infants can be assessed by measuring their respective concentrations of short chain fatty acids in the colon. Breastfed infants typically produce higher amounts of acetate and lower amounts of propionate and butyrate, as compared to formula fed infants.

A validated large intestine model system is used to conduct the evaluations (TIM-2 System, TNO Quality of Life, Zeist, Netherlands.) In this particular system, colonic microflora of a breastfed infant is introduced to a test infant formula and the changes noted as they occur in the small chain fatty acid profiles.

Each infant formula to be evaluated is predigested so that its addition to the TIM-2 system is representative of the chemical characteristics of an infant formula passing into the large intestine after passage thru the stomach and small intestine of the infant. The TIM-2 system contains representative microbiota cultured from fecal samples of exclusively breast-fed infants, typically from infants 2-4 months of age.

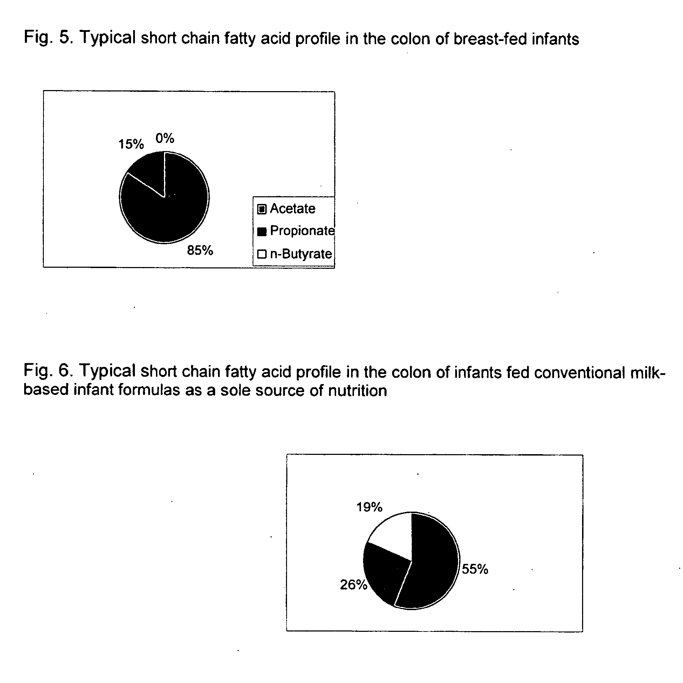

As breast-fed microflora is fed predigested infant formula, over the course of a 72 hr fermentation period, the fermentation end-products (small chain fatty acids) change as reflected by changes in the relative proportions of defined short chain fatty acids (acetate, propionate, butyrate). The SCFA profile at 72 hours for each test formula is then compared to that of a known SCFA profil from human milk (Fig 5) and to that of a conventional infant formula (Fig. 6).

This experiment evaluates and compares the SCFA profile of the following infant formulas (Formulas 1-4):

Table 2

| | Formula 1 Commercial infant formula | Formula 2 Commercial infant formula | Formula 3 Commercial infant formula | Formula 4 Example 1 infant formula |
|---|---|---|---|---|
| Gangliosides mg/L | 3.2-4.8 | 3.2-4.8 | 32-4.8 | 14 |
| Sialic acid mg/L | 115-150 | 115-150 | 115-150 | 190 |
| Lactoferrin mg/L | 2.6 | 2.6 | 2.6 | 100 |
| Phospholipids mg/L | 118 | 118 | 118 | 450 |
| FOS - short chain mg/L | 0.5 | 2.0 | -- | -- |
| FOS - short and long chain mg/L | -- | -- | 2.0 | -- |
| Small chain fatty acid profile at 72 hours in presence of breast-fed flora | | | | |
| n-butyrate | 10% | 10% | 10% | 15% |
| Propionate | 28% | 8% | 9% | 7% |
| Acetate | 62% | 82% | 81% | 78% |
| Result summary | Fig. 1 | Fig. 2 | Fig. 3 | Fig. 4 |

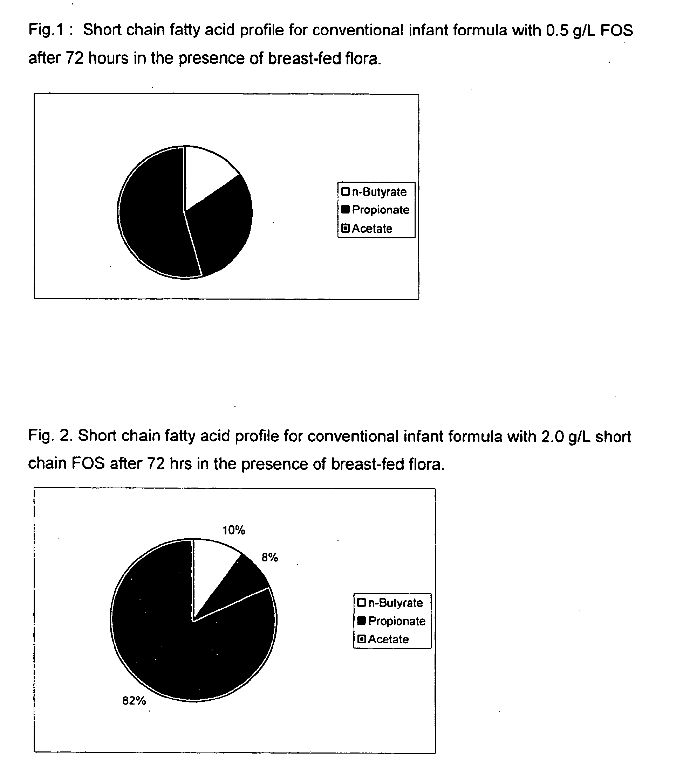

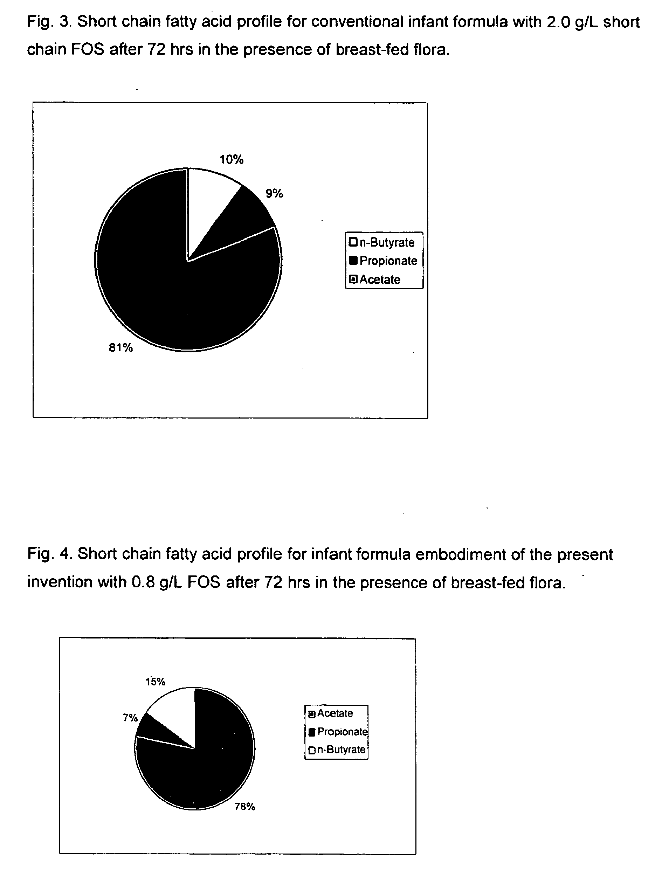

A summary of the SCFA profiles after 72 hours for each of the Formulas 1-4 are shown in Figs. 1-4, respectively. For comparison purposes, a typical SCFA profile in the colon of a 2-4 month old breastfed infant is shown in Fig 5 (Gibson, G.R. amd M.B. Roberfroid, 1995, Dietary modulation of the human colonic microbiota: introducing the concept of prebiotics, Journal of Nutrition, 125; 1401-1412) while the typical SCFA profile after 72 hr when a predigested milk-based infant formula (conventional infant formula) is introduced as a sole source of nutrition, is shown in Fig 6 (Knol, J., Scholtens, P., Kafka, C., Steenbakkers, J., Gross, S., Helm, K., Klarczyk, M., Schopfer H., Bockler, H.-M., and Wells, J., 2004, Colon microflora in infants fed formula with galacto- and fructo-oligosaccharides: more like breastfed infants, Journal Pediatric Gastroenterology. 40(1): 36-42).

From the results summarized above, it can be seen that the infant formula of the present invention (Formula 4) results in a metabolic activity profile, as reflected by relative SCFA concentrations of n-butyrate, propionate, and acetate, similar to that of the breast fed infant (Fig. 5), and significantly different from the profile associated with a conventional infant formula (Fig. 6.). This metabolic activity profile like that of the breast-fed infant will help produce a gut environment that can inhibit growth of potential pathogens, such as *C. difficile* and thus prevent the likelihood of infectious diarrheal disease (Marteen H.M.C. van Nuenen, P. Diederick Meyer, and Koen Venema, 2003, The effects of various inulins and Clostridium difficile on the metabolic activity of the human colonic microbiota in vitro, Microbial Ecology in Health Disease, 15: 137-144).

It should be noted that each of the Formulas 1-4 contained FOS, an ingredient well known for its probiotic affect on the microflora profile in the gut. Formulas 2 and 3 contained 2 g/L FOS and predictably produced an SCFA profile similar to that of human milk, while an identical formulation with only 0.5 g/L FOS (Formula 1) resulted in an SCFA profile similar to that of a conventional infant formula. Interestingly. Formula 4 produced an SCFA profile similar to that of human milk, even though it only contained 0.8 g/L FOS. It is believed that the selected concentration and combination of lactoferrin, sialic acid, phospholipid, and gangliosides of Formula 4 are responsible for the SCFA profile similar to that of human milk.

## EXPERIMENT II

The purpose of this study is to compare the performance benefits in neonatal pigs fed either a control formula or one of two different formulas embodiments of the present invention with enriched concentrations of gangliosides, phospholipids, lactoferrin, and sialic acid.

## Background

The neonatal piglet constitutes an appropriate model to evaluate nutritional intervention prior to the design and implementation of human clinical trials. Its suitability resides in the similarities of the gastrointestinal physiology of the piglet to that of the human neonate. The model is a useful tool to predict tolerance of infant formulas (Miller, E.R., Ullrey, The pig as model for human nutrition, Annu Rev Nutr 1987; 7; 361-82). The present study is designed to provide a biological assessment of the effects of two formula embodiments of the present invention.

Significant are noted in the area of diarrhea risk reduction, i.e., reduced duration of diarrhea.

## Experimental Design

The study is longitudinal and includes 3 groups of piglets fed the experimental diets, A, B or C (see Table 3) with three time points of sacrifice after 8-9, 15-16 and 29-30 days of feeding. An additional group, sacrificed at the beginning of the study, is used as a reference. The study is divided into two experiments. Piglets in the study are supplied by a certified farm.

In the first of two experiments in the study, 33 mate domestic piglets (4-5-day old) are housed in stainless steels wire cages (2 animals per cage) in a conditioned room at 27-30°C. The animals are fed 4 times a day with an adapted pig diet, according to their nutritional requirements. After an adaptation period of 3 days, 3 piglets are sacrificed. The time at which these animals are sacrificed is considered Time Zero in the study. The rest of the piglets are paired by weight and litter, and are divided into 3 groups (n=10, n=10, and n=10, respectively) that are fed also 4 times a day with the following diets:

- Diet A: Similar to Similac® Pdvance® Infant Formula, available from Abbott Laboratories, Columbus, Ohio, USA, with conventional whey protein concentrate.
- Diets Band C: Infant formula embodiment of the present invention with enriched whey protein concentrate at a level of 7.1 g/L of formula on an as-fed basis.

Diets A, B and C are adapted in terms of micronutrients (minerals and vitamins) to the special requirements of neonatal piglets. The following table shows the composition of diets A, B, C, and a standard pig diet.

### Table 3: Experimental Diets

|  | Standard pig diet per 100 g | Standard pig diet per 100ml | Diets A, B, C per 100g | Diets A, B, C per 100 ml |
|---|---|---|---|---|
| Protein | 25.5 | 4.79 | 10.9 | 1.40 |
| Fat | 36.3 | 6.82 | 28.9 | 3.71 |
| Carbohydrates | 31 | 5.83 | 53 | 6.81 |
| Ash | 5.2 | 0.98 | 5.2 | 0.67 |
| Moisture | 2 | 0.38 | 2 | 0.26 |
| Minerals |  |  |  |  |
| Na (mg) | 201.9 | 37.96 | 201.9 | 25.94 |
| K (mg) | 800 | 150.40 | 800 | 102.80 |
| Cl (mg) | 300 | 56.40 | 300 | 38.55 |
| Fe (mg) | 32.7 | 6.15 | 32.7 | 4.20 |
| Zn (mg) | 13 | 2.44 | 13 | 11.67 |
| Cu (mg) | 0.8 | 0.15 | 0.8 | 0.10 |
| Mg (mg) | 61.4 | 11.54 | 61.4 | 7.89 |
| Mn (mg) | 0.5 | 0.09 | 0.5 | 0.06 |
| Ca (mg) | 1069 | 200.97 | 1069 | 137.37 |
| P (mg) | 792 | 148.90 | 792 | 101.77 |

(continued)

|  | Standard pig diet per 100 g | Standard pig diet per 100ml | Diets A, B, C per 100g | Diets A, B, C per 100 ml |
|---|---|---|---|---|
| I ($\mu$g) | 61.7 | 11.60 | 61.7 | 7.93 |
| Se ($\mu$g) | 20 | 3.76 | 20 | 2.57 |
| Vitamins |  |  |  |  |
| Vitamin A (IU) | 400 | 75.20 | 400 | 51.40 |
| Vitamin D (IU) | 53 | 9.96 | 53 | 6.81 |
| Vitamin E (IU) | 5 | 0.94 | 5 | 0.64 |
| Vitamin K ($\mu$g) | 21.5 | 4.04 | 21.5 | 2.76 |
| Thiamine (B1) (mg) | 0.2 | 0.04 | 0.2 | 0.03 |
| Riboflavin (B2) (mg) | 0.5 | 0.09 | 0.5 | 0.06 |
| Pyridoxine (B6) (mg) | 0.317 | 0.06 | 0.317 | 0.04 |
| Cyanocobalamine (B12) ($\mu$g) | 3.5 | 0.66 | 3.5 | 0.45 |
| Pantothenic acid (mg) | 2 | 0.38 | 2 | 0.26 |
| Folic acid ($\mu$g) | 100 | 18.80 | 100 | 12.85 |
| Biotin ($\mu$g) | 26.5 | 4.98 | 26.5 | 3.41 |
| Niacin (mg) | 3 | 0.56 | 3 | 0.39 |
| Vitamin C (mg) | 71.25 | 13.40 | 71.25 | 9.16 |
| Choline (mg) | 170 | 31.96 | 170 | 21.85 |
| Others |  |  |  |  |
| Nucleotides (mg) | - | - | 56.14 | 7.21 |
| Energy | 552.7 | 103.91 | 515.7 | 66.27 |
|  |  |  |  |  |

**Table 4**

|  | Diet A (control) | Diet B | Diet C |
|---|---|---|---|
| Protein | Milacteal-65[1] | PSNU 2900[2] (7.1 g/L as fed) | PSNU 2900[2] (7.1 g/L as fed) |
| Ganglioside mg/L | 3.2-4.8 | 14 | 14 |
| Sialic acid mg/L | 115-150 | 190 | 190 |
| Lipid-bound sialic acid (wt% of total sialic acid) | < 0.1% | 2.5-3.0 | 2.5-3.0 |
| Phospholipid mg/L | 118 | 450 | 450 |
| Lactoferrin mg/L | 2.6 | 100 | 100 |
| FOS g/L | 0 | 2 | 2 |
| Native Lactoferrin wt% of lactoferrin | ~12 | ~12 | ~12 |
| Arachidonic acid - wt% of total fatty acids | 0.4 | 0.4 | 0.2 |

(continued)

|  | Diet A (control) | Diet B | Diet C |
|---|---|---|---|
| Docosahexaenoic acid - wt% of total fatty acids | 0.15 | 0.15 | 0.1 |

| 1. Milacteal-75, whey protein concentrate, Dairy Specialties, Inc., MILEI GmbH, Germany; contains<br>2. Lacprodan MFGM10, enriched whey protein concentrate, Aria Food Ingredients, Denmark |
|---|

All diets, once prepared, are used immediately or are stored in inert atmosphere cans at 4°C and used within 24 hours. Diets are in powder form and are reconstituted with water to 18.8% by weight for the adapted pig diet and to 12.85% by weight for Diets A, B, and C. The reconstituted liquid diets are poured on the cage feeders. The remaining liquid is removed and measured and the feeders are cleaned prior to subsequent feedings.

For each group, 3 or 4 piglets are sacrificed at 8-9, 15-16 and 29-30 days after the initiation of feeding with control (Diet A) or experimental formulas (Diets B and C).

In the second experiment of the study, 44 male domestic piglets (4-5-day old) are housed individually in the same type of cages and in the same room described for the first experiment. The feeding protocol is the same and 4 piglets are sacrificed, after the adaptive period, to complete the reference group. The rest of the piglets are paired by weight and litter and divided into 3 groups (n=13, n=13, and n=14, respectively) that are fed with diets A, B and C. One or two piglets more are included on each group to replace withdrawals.

Dietary intake and weight gain are monitored 4 times a day and twice weekly, respectively, for each piglet. The incidence and duration of diarrhea is recorded and evaluated. Diarrhea is defined as stool consistency scored as watery (score of 5) for 2 days or more with concomitant poor catch-up growth. Once persistent diarrhea is confirmed, the affected piglets are treated with antibiotics following standard protocols for the neonatal pig.

## Results

### Withdrawals

Experiment 1: One piglet of group A is very small at birth and does not catch up with the rest of the piglets. One pig of group C dies 10 days after enrolment. Another pig of group C is a female as confirmed at the end of the experiment. Consequently, n for group A at 29-30 days is 3 instead of 4, and n of group C at the same age is 2 instead of 4.

Experiment 2: One piglet dies during the period of adaptation. Another piglet of group B dies 6 days after enrolment. Two pigs of group A and one in group B are excluded from the study because they are very small at birth and do not grow as the rest of piglets.

Consequently, the complete study target of 7 piglets for each time point and group is met in all of the groups except for group A at 29-30 days (n=6).

### Body weight and dietary intake

The evolution of body weight and dietary intake is very similar for the 3 different dietary groups. There are no differences in body weight evolution among groups for the duration of the experiment. Dietary intake is significantly higher in group C than in groups A and B, only for the interval of time between 16 and 28 days. For the rest of the time there are no differences among groups. When the intake is represented as accumulated dietary intake there are no differences among groups. Likewise, the evolution of the food efficiency, calculated as grams of body weight /100 kcal of intake is similar for the 3 groups. There are no differences among the groups when different intervals of time are considered or for the entire study period.

### Diarrhea

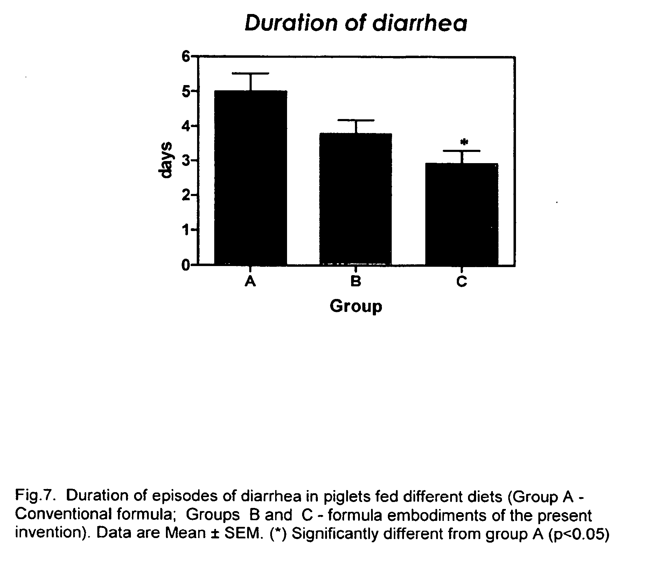

The number of pigs that suffered from diarrhea during the study is similar for the three dietary groups (no significant difference noted). However, when the duration of the episodes of diarrhea is analyzed (Fig. 7) it is possible to detect significant differences among groups. Duration of diarrhea is significantly lower in group C than in group A, and group B showed a tendency (p=0.1512) to be lower than group A for this parameter. In fact, if Bonferronils correction is not used for this last comparison, a stronger tendency is found, with a p value of 0.0504.

## Conclusions

The duration of diarrhea is significantly lower in group C than in group A, and group B showed a tendency (p=0.1512) to be lower than group A for this parameter. In fact, if Bonferronils correction is not used for this last comparison, a stronger tendency is found, with a p value of 0.0504.

The reduced duration of diarrhea appears to be the result of using a whey protein concentrate with enriched levels of lactoferrin, phospholipid, sialic acid, and gangliosides (PSNU 2900 WPC for Samples B and C) as compared to a conventional whey protein isolate (SIMILAC ADVANCE ® Infant Formula, Abbot Labs, Columbus, Ohio - modified for Sample A).

## EXPERIMENT III

This second animal study is conducted, similar in protocol to that used in Experiment II, except that this study compares the performance benefits of the following feedings:

- Diet A: Infant formula embodiment of the present invention with enriched whey protein concentrate at a level of 6.4 g/L of formula on an as-fed basis.
- Diet B: Similac® Advance® Infant Formula, available from Abbott Laboratories, Columbus, Ohio, USA, with conventional whey protein concentrate.
- Diet C: Enfalac DHA+ARA™ Infant Formula, available from Bristol-Myers Squibb (Thailand), with conventional whey protein concentrate.

## Experimental Design

The study is longitudinal and includes three groups of piglets fed the experimental diets, A, B or C (see Table 4) with two time points of sacrifice after 7-8 days and 14-15 days of feeding. An additional group of piglets fed sows milk is included in the study as a reference. Animals in the sows milk group are age-matched to coincide with the sacrifice time points of the animals fed the experimental diets. Animals from the sows milk group are sacrificed at the beginning of the study, after 14-16 days old, and after 23-24 days old.

Sixty domestic piglets (3-4-day old) are supplied by a certified farm. Eight piglets from the sows milk reference group are sacrificed. Forty-eight of the piglets are paired by weight, litter and sex, and are divided into 3 groups (n=16, n=16, and n=16, respectively). Four of the remaining piglets are randomly allocated to the 3 groups (1 to Group A, 1 to Group B, and 2 to Group C). The piglets are housed in stainless steels wire cages in a conditioned room at 27°C. The animals are fed four times a day with an adapted pig diet, according to their nutritional requirements for a period of three days. Following the three day adaptation period, the piglets are fed four times a day with one of three experimental diets. The time at which the animals are first fed the experimental diet is considered Time Zero in the study.

The following tables show the composition of the standard pig diet and of diets A, B and C:

### Table 5: Experimental Diets

|  | Standard pig diet per 100 g | Standard pig diet per 100ml | Diets A and B per 100g | Diets A and B per 100 ml | Diet C per 100 g | Diet C per 100 ml |
|---|---|---|---|---|---|---|
| Protein | 25.5 | 4.79 | 10.9 | 1.40 | 12 | 1.5 |
| Fat | 36.3 | 6.82 | 28.9 | 3.71 | 30 | 3.9 |
| Carbohydrates | 31 | 5.83 | 55.3 | 7.1 | 52 | 6.7 |
| Ash | 5.2 | 0.98 | 2.9 | 0.37 | 3.5 | 0.45 |
| Minerals |  |  |  |  |  |  |
| Na (mg) | 201.9 | 37.96 | 126 | 16 | 147 | 19 |
| K (mg) | 800 | 150.40 | 552 | 71 | 620 | 80 |
| Cl (mg) | 300 | 56.40 | 342 | 44 | 390 | 50 |
| Fe (mg) | 32.7 | 6.15 | 9.5 | 1 | 9.4 | 1 |
| Zn (mg) | 13 | 2.44 | 3.84 | 1 | 5.8 | 1 |

(continued)

|  | Standard pig diet per 100 g | Standard pig diet per 100ml | Diets A and B per 100g | Diets A and B per 100 ml | Diet C per 100 g | Diet C per 100 ml |
|---|---|---|---|---|---|---|
| Cu (mg) | 0.8 | 0.15 | 0.473 | 0.061 | .370 | .048 |
| Mg (mg) | 61.4 | 11.54 | 32 | 4 | 47 | 6 |
| Mn (mg) | 0.5 | 0.09 | 0.05 | 0.006 | .076 | .01 |
| Ca (mg) | 1069 | 200.97 | 410 | 53 | 390 | 50 |
| P (mg) | 792 | 148.90 | 221 | 28 | 260 | 33 |
| I (mcg) | 61.7 | 11.60 | 32 | 4 | 79 | 10 |
| Se (mcg) | 20 | 3.76 | 12 | 2 | 17.3 | 2 |
| Vitamins |  |  |  |  |  |  |
| Vitamin A (IU) | 400 | 75.20 | 1577 | 203 | 470 | 60 |
| Vitamin D (IU) | 53 | 9.96 | 315 | 41 | 310 | 40 |
|  | 5 | 0.94 | 16 | 2 | 9.4 | 1 |
| Vitamin E (IU) Vitamin K (mcg) | 21.5 | 4.04 | 42 | 5 | 50 | 6 |
| Thiamine (mg) | 0.2 | 0.04 | 0.53 | .07 | 0.39 | .05 |
| Riboflavin (mg) | 0.5 | 0.09 | 0.79 | 0.1 | 0.85 | 0.1 |
| Pyridoxine (mg) | 0.317 | 0.06 | 0.32 | 0.04 | 0.35 | 0.05 |
| Cyanocobalamine (mcg) | 3.5 | 0.66 | 1.31 | 0.17 | 2.1 | 0.27 |
| Pantothenic acid (mcg) | 2 | 0.38 | 2365 | 304 | 3000 | 386 |
| Folic acid (mcg) | 100 | 18.80 | 79 | 10 | 84 | 11 |
| Biotin (mcg) | 26.5 | 4.98 | 23 | 3 | 14.7 | 2 |
| Niacin (mg) | 3 | 0.56 | 5.5 | 1 | 6.3 | 1 |
| Vitamin C (mg) | 71.25 | 13.40 | 47 | 6 | 120 | 15 |
| Others |  |  |  |  |  |  |
| Nucleotides (mg) | - | - | 56 | 7 | 17 | 2 |
| Energy | 552.7 | 103.91 | 525 | 68 | 523 | 67 |

**Table 6**

|  | Diet A | Diet B | Diet C |
|---|---|---|---|
| PSNU 2900[1] Protein, g/L infant formula | 6.4 | 0 | 0 |
| Ganglioside mg/L | 172 | 4 | 4.6 |
| Sialic acid mg/L | 157 | 139 | 248 |
| Lipid-bound sialic acid (wt% of total sialic acid) | 4.4 | 1.1 | 0.6 |
| Phospholipid mg/L | 440 | 140 | 850 |
| Native Lactoferrin wt% of lactoferrin | -5 | -12 | -16 |
| Prebiotic g/L | 0.8 g/L FOS | 0 | 3.6 (GOS÷Inulin) |

(continued)

|  | Diet A | Diet B | Diet C |
|---|---|---|---|
| Arachidonic acid - wt% of total fatty acids | 0.4 | 0.4 | 0.65 |
| Docosahexaenoic acid - wt% of total fatty acids | 0.2 | 0.15 | 0.35 |
| 1.Lacprodan MFGM10, enriched whey protein concentrate, Arta Food Ingredients, Denmark | | | |

All diets, once prepared, are used immediately or are stored in inert atmosphere cans at 4°C and used within 24 hours. Diets are in powder form and are reconstituted with water to 12.85% by weight for Diets A, B, and C. The reconstituted liquid diets are poured on the cage feeders. The remaining liquid is removed and measured and the feeders are cleaned prior to subsequent feedings.

For each group, 8 piglets are sacrificed at 7-8 and 14-15 days after the initiation of feeding with control (Diets B and C) or experimental formulas (Diet A).

## Results

## Withdrawals

Four piglets from each group die. Three of the piglets in group A and one of the piglets in group B die during the period of adaptation. One piglet from group B is excluded from the study, because the piglet is very small and did not grow as the rest of the piglets.

Consequently, at 7-8 days, n for group A is 7, n for group B is 8, and n for group C is 8. At 14-15 days, n for group A is 6, n for group B is 4, and n for group C is 6.

## Body weight and dietary intake

The evolution of body weight and dietary intake is very similar for the 3 different dietary groups. There are no differences in body weight evolution among groups for the duration of the experiment. When the intake is represented as accumulated dietary intake there are no differences among groups. The evolution of the food efficiency, calculated as grams of body weight /100 kcal of intake, is higher but not significantly different, in group C than in groups A and B, only for the interval of time between 7 and 14 days. A high variability is observed for the interval of time between 0 and 6 days, but there are no differences among groups.

## Diarrhea

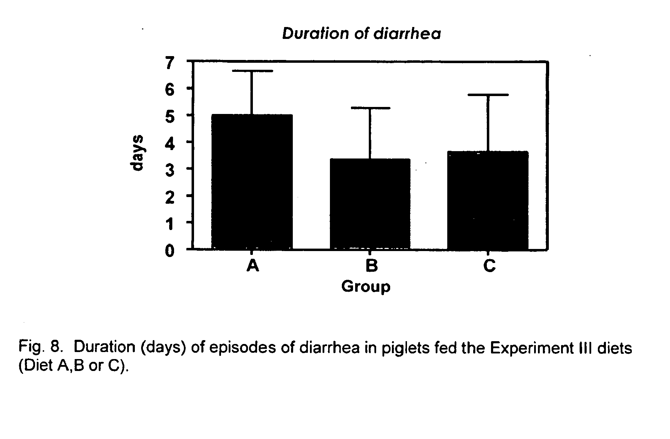

The number of pigs that suffer from diarrhea during the study is similar for the three dietary groups (no significant difference noted). There are also no significant differences in the duration of diarrhea among groups (Fig. 8).

## Conclusions

Experiment 1 also shows that infant formulas comprising conventional whey protein isolate (Diet A) do not reduce the duration of diarrhea.

Experiment 1 also shows that infant formulas (Diets B and C) comprising enriched levels of lactoferrin, phospholipid, sialic acid, and gangliosides, each of which is provided in whole or in part by enriched whey protein concentrate (PSNU 2900 WPC at 7.1 g/L of formula on an as-fed basis) reduced the duration of diarrhea.

Experiment 2 shows that infant formulas (Diet A) comprising enriched levels of lactoferrin, phospholipid, sialic acid, and gangliosides, but lower levels of enriched whey protein concentrate (PSNU 2900 WPC at 6.4 g/L of formula on an as-fed basis) do not reduce the duration of diarrhea.

The results of both experiments therefore suggest that infant formulas comprising enriched levels of lactoferrin, phospholipid, sialic acid, and gangliosides, reduce the duration of diarrhea, provided that the formula includes a minimum threshold level of enriched whey protein concentrate as defined herein.

## EXAMPLES

The following examples represent specific embodiments within the scope of the present invention, each of which is given solely for the purpose of illustration and is not to be construed as limitations of the present invention, as many variations thereof are possible without departing from the spirit and scope of the invention. All exemplified amounts are weight percentages based upon the total weight of the composition, unless otherwise specified.

## Powder Infant formulas

The following are powder formula embodiments of the present invention, including methods of using the formula in infants. Ingredients for each formula are listed in the table bellow.

**Table 5: Examples 1-4**

| ingredients | EXAMPLE 1 | EXAMPLE 2 | EXAMPLE 3 | EXAMPLE 4 |
|---|---|---|---|---|
| | AMOUNT PER 1000 kg OF FORMULA | | | |
| LACTOSE | 428.76 kg | 428.76 kg | 428.76 kg | 525.02 kg |
| NON FAT DRY MILK LOW HEAT | 200.62 kg | 197.62 kg | 197.62 kg | N/A kg |
| HIGH OLEIC SUNFLOWER OIL | 106.53 kg | 105.53 kg | 106.53 kg | 102.97 kg |
| COCONUT OIL | 90.74 kg | 91.09 kg | 92.87 kg | 87.57 kg |
| SOY OIL | 86.37 kg | 86.37 kg | 86.37 kg | 83.49 kg |
| LACP RODAN MFGM-10 | 51.00 kg | 53.96 kg | 53.96 kg | 154.18 kg |
| POTASSIUM CITRATE | 7.20 kg | 7.20 kg | 7.20 kg | 7.20 kg |
| OLIGOFRUCTOSE (FRUCTO-OLIGOSACCHARIDE) | 7.04 kg | 7.04 kg | 7.04 kg | 7.04 kg |
| CALCIUM CARBONATE | 4.018 kg | 4.02 kg | 4.02 kg | 9.563 kg |
| ARACHIDONIC ACID (AA) | 2.87 kg | 2.87 kg | 1.44 kg | 2.87 kg |
| POTASSIUM CHLORIDE | 1.614 kg | 1.61 kg | 1.61 kg | 1.717 kg |
| DOCOSAHEXAENOIC ACID (DHA) | 1.40 kg | 1.05 kg | 0.70 kg | 1.40 kg |
| SODIUM CHLORIDE | 1.303 kg | 1.30 kg | 1.30 kg | 3.280 kg |
| CHOLINE CHLORIDE | 1.04 kg | 1.04 kg | 1.04 kg | 1.04 kg |
| ASCORBIC ACID | 166.88 g | 766.88 g | 766.88 g | 766.88 g |
| VITAMIN PREMIX 25913 | 746.460 g | 746.46 g | 746.46 g | 746.460 g |
| MAGNESIUM CHLORIDE | 641.63 g | 641.63 g | 641.63 g | 2.18 g |
| FERROUS SULFATE | 511.98 g | 511.98 g | 511.98 g | 508.79 g |
| TAURINE | 373.84 g | 373.84 g | 373.84 g | 373.84 g |
| ASCORBYL PALMITATE | 349.22 g | 349.22 g | 349.22 g | 349.22 g |
| VITAMIN A, D, RRR-E, K PREMIX | 345.00 g | 345.00 g | 345.00 g | 345.00 g |
| M-INOSITOL | 254.64 g | 254.64 g | 254.64 g | 254.64 g |
| CYTIDINE 5'-MONOPHOSPHATE | 243.188 g | 243.19 g | 243.19 g | 243.188 g |
| DISODIUM URIDINE 5'-MONOP 25% | 192.286 g | 192.29 g | 192.29 g | 192.286 g |
| DISODIUM GUANOSINE 5'-MONOPHO | 175.452 g | 175.45 g | 175.45 g | 175.452 g |
| TOCOPHEROL-2 FOOD GRADE ANTIOXIDANT | 166.37 g | 166.37 g | 166.37 g | 166.37 g |
| ZINC SULFATE | 165.70 g | 165.70 g | 165.70 g | 206.02 g |
| ADENOSINE 5'-MONOPHOSPHATE COPPER SULFATE | 92.043 g | 92.04 g | 92.04 g | 92.043 g |
| ENCAPSULATED | 26.136 g | 26.94 g | 26.14 g | 27.691 g |
| BETA CAROTENE 30% | 11.64 g | 11.64 g | 11.64 g | 11.64 g |
| TRICALCIUM PHOSPHATE | 3.000 g | 3.00 g | 3.00 g | 3.000 g |
| MANGANESE SULFATE | 1.00 g | 1.00 g | 1.00 g | 1.00 g |
| SODIUM SELENATE | 232.03 mg | 232.03 mg | 232.03 mg | 232,03 mg |

Each of the exemplified may be prepared in a similar manner by making at least two separate slurries that are later blended together, heat treated, standardized, evaporated, dried and packaged.

Initially, in an oil blend tank, under Nitrogen conditions, an oil slurry is prepared by combining high oleic sunflower oil, soybean oil and coconut oil, followed by the addition of ascorbyl palmitate, beta carotene, vitamin ADEK and mixed tocopherols. The tank is then agitated for 20 minutes and the QA analysis. Following QA clearance and immediately prior to processing the ARA oil, and DHA oil are added to the oil blend tank. The resulting oil slurry is held under moderate agitation at room temperature (<30°C) for until it is later blended with the other prepared slurry.

Skim milk-oil slurry is prepared by combining the oil blend slurry in approximately 40% of the fluid skim milk at 35-45°C in a continuous agitation process followed by the addition of an enriched whey protein concentrate. This oil-protein slurry is heated to 65-70°C, two stages homogenised at 154-190/25-45 bars, cooled to 3-6°C and stored in the process silo.

Skim milk □ carbohydrate slurry is prepared by dissolving lactose and Skim milk powder in approximately 60% of the fluid skim milk at 60-75°C. This slurry is held under agitation in the solubilization tank for approximately 2 minutes before pumping to the plate exchanger where is cooled to 3-6°C and conveyed to the process silo where is blended with the skim milk-oil slurry.

Mineral slurry 1 is prepared by dissolving magnesium chloride, sodium chloride, potassium chloride and potassium citrate in water at room temperature and held under agitation for a minimum of 5 minutes. The mineral slurry 1 is added into the process silo.

Mineral slurry 2 is prepared by dissolving tricalcium phosphate and calcium carbonate in water at 40-60°C and held under agitation for a minimum of 5 minutes. The mineral slurry 2 added is into the process silo.

Oligofructose slurry is prepared by dissolving oligofructose in water at 40-60°C and held under agitation for a minimum of 5 minutes. The oligofructose slurry is added into the process silo.

The batch is agitated in the process silo for a minimum of 45 minutes before take a sample for analytical testing. Based on the analytical results of the quality control tests, an appropriate standardization process is carried out.

Vitamin C slurry is prepared by dissolving potassium citrate and ascorbic acid in water at room temperature and held under agitation for a minimum of 5 minutes. The Vitamin C slurry is added into the process silo.

Water-soluble vitamins-inositol slurry is prepared by dissolving potassium citrate, water-soluble vitamin premix and inositol in water at 40-60°C and held under agitation for a minimum of 5 minutes. The water-soluble vitamin-inositol slurry is added into the process silo.

Ferrous sulphate slurry is prepared by dissolving potassium citrate and ferrous sulphate in water at room temperature and held under agitation for a minimum of 5 minutes.

Nucleotides-choline slurry is prepared by dissolving nucleotide-choline premix in water at room temperature and held under agitation for a minimum of 5 minutes. The nucleotides-choline slurry is added into the process silo.

The final batch is agitated in the process silo for a minimum of 60 minutes before taking a sample for analytical testing. Based on the analytical results of the quality control tests, an appropriate vitamin C and pH correction could be carried out. The final batch is held under moderate agitation at 3-6°C.

After waiting for a period of not longer than 7 days, the resulting blend is preheated to 90-96°C, heated at 110-130°C for 3 seconds. The heated blend is passed through a flash cooler to reduce the temperature to 93-97°C and then through an evaporator to achieve the desired solids. The product is then heated to 75-78°C and pumped to the spray-drying tower. The resulting powder product is collected and stored in bulk powder silos and tested for quality. The finished product is then placed into suitable containers. Samples are taken for microbiological and analytical testing both during in-process and at the finished product stages.

## Alternative Process

Each of the exemplified may be prepared in a similar manner by making at least two separate slurries that are later blended together, heat treated, standardized, dried, dry blended and packaged.

Initially, skim milk- mineral slurry is prepared by dissolving approximately 80% of the skim milk powder in demineralized water at 60-65°C, followed by the addition of potassium citrate and potassium hydroxide. The pH of the resulting blend is adjusted to 7.7-8.7 with potassium hydroxide or citric acid.

The rest of the skim milk powder and magnesium chloride is added to the previous blend. The pH of the resulting blend is adjusted to 6.7-7.2 with potassium hydroxide or citric acid.

In a separate tank a new slurry is prepared by dissolving choline chloride and Inositol in demineralized water at room temperature. The resulting slurry is combined with the skim milk-mineral slurry and is held under moderate agitation at 60-65°C for no longer than 1 hour until it is later blended with the additional ingredients.

In a separate tank a new slurry is prepared by dissolving Taurine in demineralized water at 70°C. The resulting slurry is combined with the skim milk-mineral slurry and is held under moderate agitation at 60-65°C for no longer than 1 hour until it is later blended with the additional ingredients.

An enriched whey protein concentrate is added to the skim milk-mineral slurry followed by lactose and oligofructose. The slurry is agitated in the process silo for a minimum of 30 minutes before take a sample for analytical testing. The pH of the resulting blend is adjusted to 6.5-7.1 with potassium hydroxide or citric acid.

In a oil process tank, under Nitrogen condition, an oil slurry is prepared by combining high oleic sunflower oil, soybean oil and coconut oil, followed by the addition of vitamin ADEK Beta carotene, mixed tocopherols, ascorbyl palmitate, ARA oil, and DHA oil. The resulting oil slurry is held under moderate agitation at room temperature for no longer than six hours until it is later blended with the protein-carbohydrate-mineral slurry.

After waiting for a period of not less than 30 minute nor greater than 6 hours, the protein-carbohydrate-mineral slurry is deaerated at 70-80°C and further heated to 84-86°C. At this point of the process the oil slurry is injected on line at 50-80°C. The final blend is cooled to 68-72°C and emulsified through a doubfe stage homogeniser at 145-155 bars in the first stage and at 30-40 bars in the second stage. The heated blend is passed through a plate cooler to reduce the temperature to 3-5°C and is stored in a process silo.

A mineral solution and an ascorbic acid solution are prepared separately by adding the following ingredients to the processed blended. The mineral solution is prepared by adding the following ingredients to sufficient amount of demineralized water with agitation: citric acid, manganese sulphate, sodium selenate and zinc sulphate. The ascorbic acid solution is prepared by adding ascorbic acid to a sufficient amount of demineralized water to dissolve the ingredient. The processed blend is held under moderate agitation at 3-5°C for no longer than 48 hours. Samples are taken for analytical testing.

The cooled blend is then heated at 69-73°C and homogenised at 60-70/30-40 bars and sent to the spray drying tower. The base powder product is collected and stored into bulk powder containers. Samples are taken for microbiological and analytical testing.

After the corresponding analytical and microbiological tests are completed, the base powder product is released for the dry blending of the rest of ingredients. The quantities of the remaining ingredients required to obtain the final powder product are determined and entered in the automatic weight system. The system weighs every component of the dry blending premix (Lactose, calcium carbonate, potassium chloride, sodium chloride, water soluble premix, nucleotide cytidine 5-monophosphate, nucleotide disodium uridine 5-monophosphate, nucleotide disodium guanosine 5-monophosphate, nucleotide adenosine 5-monophosphate, copper sulphate and calcium phosphate tribasic. The base powder product and the dry blending premix are conveyed to the blender. The blend is held under agitation for a period of no lees than 20 minutes.

After the blend is completed, the finished product is conveyed to the packaging machine and placed into suitable containers. Samples are taken for microbiological and analytical testing

The exemplified formulas (Examples 1-4) are non-limiting examples of powder formula embodiments of the present invention. Each formula is reconstituted with water prior to use to a caloric density ranging from about 19 to about 24 kcal/fl oz, and then fed to an infant as a sole source of nutrition during the first 9 months of life, including the first 4 months of life. Infants using the formula experience reduced risk of diarrhea and less severe illness in the form of reduced diarrhea duration when so inflicted. These infants also develop a gut microflora similar to that of breast-fed infants.

**Liquid Infant formulas**

Examples 1-4 are modified by conventional means to form ready-to-feed liquid formula embodiments (Examples 5-8) of the present invention. The ingredients for Examples 5-8 correspond to the ingredients in Examples 1-4, respectively.

The exemplified formulas (Examples 5-8) are non-limiting examples of liquid formula embodiments of the present invention. Each formula is adjusted to a caloric density ranging from about 19 to about 24 kcal/fl oz. The formula is fed to an infant as a sole source of nutrition during the first 9 months of life, including the first 4 months of life. Infants using the formula experience reduced risk of diarrhea in the form of reduced diarrhea duration when so inflicted. These infants also develop a gut metabolic activity profile similar to that of breast-fed infants.

**Claims**

1. Infant formula comprising, on an as-fed basis:

    (A) at least about 5 mg/L of gangliosides,
    (B) at least about 150 mg/L of phospholipids,
    (C) lactoferrin, and
    (D) at least about 70 mg/L of sialic acid, with at least about 2.5% by weight of the sialic acid as lipid-bound sialic acid;

    wherein from about 50% to 100% by weight of each of the gangliosides, phospholipids, lactoferrin, and sialic acid are provided by an enriched whey protein concentrate, said concentrate representing at least about 6.5 g/L of the formula on an as-fed basis.

2. An infant formula according to claim 1 wherein the lipid-bound sialic acid represents from about 2.7% to about 5%

by weight of the total sialic acid.

3.  An infant formula according to claim 1 comprising, on an as-fed basis, (A) from about 7 mg/L to about 50 mg/L or gangliosides, (B) from about 200 mg/L to about 600 mg/L of phospholipids, and (C) from about 90 mg/L to about 250 mg/L of sialic acid.

4.  An infant formula according to claim 1 comprising, on an as-fed basis, from about 50 mg/L to about 2000 mg/L of lactoferrin, with at least about 6% by weight of the lactoferrin as native lactoferrin.

5.  An infant formula according to claim 1 wherein the total phospholipid comprises at least 20% by weight of sphingomyelin.

6.  An infant formula according to claim 5 wherein the phospholipid comprises sphingomyelin, phosphatidyl ethanolamine, phosphatidyl choline, phosphatidyl inositol, and phosphatidyl serine.

7.  An infant formula according to claim 1 further comprising from about 0.05% to about 5% of a fructopoliysaccharide.

8.  An infant formula according to claim 1 wherein the formula contains less than about 0.5% free glycomacropeptides, on an as-fed basis.

9.  An infant formula according to claim 1 wherein the infant formula is substantially free of soy phospholipids, egg phospholipides, and combinations thereof.

10. An infant formulas according to claim 1 wherein the infant formula comprises less than about 0.2% by weight of milk fat on an as-fed basis.

11. An infant formula according to claim 1 wherein the infant formula is a powder or a ready-to-feed liquid.

12. An infant formula according to claim 1 comprising, on an as-fed basis, from about 6.5 g/L to about 10.9 g/L enriched whey protein concentrate.

13. An infant formula according to claim 1, wherein from about 60% to about 90% by weight of each of the gangliosides, phospholipids, lactoferrin, and sialic acid are provided by the enriched whey protein concentrate, said concentrate representing at least about 6.5 g/L of the formula on an as-fed basis.

14. An infant formula comprising, on an as-fed basis:

    (A) at least about 5 mg/L of gangliosides,
    (B) at least about 150 mg/L of phospholipids,
    (C) lactoferrin,
    (D) at least about 70 mg/L of total sialic acid with at least about 2.5% by weight of the sialic acid as lipid-bound sialic acid;

    wherein from about 50% to 100% by weight of each of the gangliosides, phospholipids, lactoferrin, and sialic acid are provided by an enriched whey protein concentrate, said concentrate representing at least about 6.5 g/L of the formula on an as-fed basis, for use in reducing the risk of diarrhea in an infant or for use in producing a gut microflora profile similar to that of breast-fed infants, by administering or instructing a caregiver to administer the formula to said infant.

15. An infant formula according to claim 14 wherein the formula is administered as a sole source of nutrition.

16. An infant formula according to claim 16 wherein the infant formula comprises, on an as-fed basis, from about 50 mg/L to about 2000 mg/L of lactoferrin, with at least about 6% by weight of the lactoferrin as native lactoferrin.

17. An infant formula according to claim 14 wherein the lipid-bound sialic acid represents from about 2.7% to about 5% by weight of the total sialic acid.

18. An infant formula according to claim 14, wherein the infant formula comprises, on an as-fed basis, (A) from about 7 mg/L to about 50 mg/L of gangliosides, (B) from about 200 mg/L to about 600 mg/L of phospholipids, and (C) from about 90 mg/L to about 250 mg/L of sialic acid.

19. An infant formula according to claim 14 wherein the total phospholipid comprises at least 20% by weight of sphingomyelin.

20. An infant formula according to claim 14 wherein the infant formula comprises less than about 0.2% by weight of milk fat on an as-fed basis.

21. An infant formula according to claim 14 wherein the formula comprises less than 0.5% by weight of free glycomacropeptides on an as-fed basis.

22. An infant formula according to claim 14, wherein the infant formula comprises, on an as-fed basis, from about 6.5 g/L to about 10.9 g/L of enriched whey protein concentrate.

23. An infant formula according to claim 14, wherein from about 60% to about 90% by weight of each of the gangliosides, phospholipids, lactoferrin, and sialic acid are provided by the enriched whey protein concentrate, said concentrate representing at least about 6.5 g/L of the formula on an as-fed basis.

24. An infant formula according to claim 14 for use in producing a gut microflora profile similar to that of breast-fed infants, wherein from about 50% to 100% by weight of the combination of gangliosides, phospholipids, and sialic acid is from an enriched whey protein concentrate.

25. An infant formula according to claim 14 for use in producing a gut microflora profile similar to that of breast-fed infants, wherein the formula further comprises from about 0.05% to about 5% of a fructopolysaccharide.


**Patentansprüche**

1. Säuglingsanfangsnahrung, die, auf einer wie zugeführt (as fed) Basis, Folgendes umfasst:

    (A) mindestens ungefähr 5 mg/l Ganglioside,
    (B) mindestens ungefähr 150 mg/l Phospholipide,
    (C) Lactoferrin; und
    (D) mindestens ungefähr 70 mg/l Sialsäure, mit mindestens ungefähr 2,5 Gewichtsprozent der Sialsäure als Lipid-gebundener Sialsäure,

    worin von ungefähr 50 Gewichtsprozent bis 100 Gewichtsprozent jeweils der Ganglioside, der Phospholipide, des Lactoferrins und der Sialsäure von einem angereicherten Molkenproteinkonzentrat geliefert werden, wobei das Konzentrat mindestens ungefähr 6,5 g/l der Anfangsnahrung auf, einer wie zugeführt Basis darstellt.

2. Eine Säuglingsanfangsnahrung gemäß Anspruch 1, worin die Lipid-gebundene Sialsäure von ungefähr 2,7 Gewichtsprozent bis ungefähr 5 Gewichtsprozent der gesamten Sialsäure darstellt.

3. Eine Säuglingsanfangsnahrung gemäß Anspruch 1, die auf einer wie zugeführt Basis folgendes umfasst: (A) von ungefähr 7 mg/l bis ungefähr 50 mg/l Ganglioside, (B) von ungefähr 200 mg/l bis ungefähr 600 mg/l Phospholipide, und (C) von ungefähr 90 mg/l bis ungefähr 250 mg/l Sialsäure.

4. Eine Säuglingsanfangsnahrung gemäß Anspruch 1, die auf einer wie zugeführt Basis von ungefähr 50 mg/l bis ungefähr 2000 mg/l Lactoferrin umfasst, wobei mindestens ungefähr 6 Gewichtsprozent des Lactoferrins als natives Lactoferrin vorliegen.

5. Eine Säuglingsanfangsnahrung gemäß Anspruch 1, worin das gesamte Phospholipid mindestens 20 Gewichtsprozent Sphingomyelin umfasst.

6. Eine Säuglingsanfangsnahrung gemäß Anspruch 5, worin das Phospholipid Sphingomyelin, Phosphatidylethanolamin, Phosphatidylcholin, Phosphatidylinositol und Phosphatidylserin umfasst.

**7.** Eine Säuglingsanfangsnahrung gemäß Anspruch 1, die weiter von ungefähr 0,05% bis ungefähr 5% eines Fructopolysaccharids umfasst.

**8.** Eine Säuglingsanfangsnahrung gemäß Anspruch 1, worin die Anfangsnahrung weniger als ungefähr 0,5% freie Glycomacropeptide auf einer wie zugeführt Basis enthält.

**9.** Eine Säuglingsanfangsnahrung gemäß Anspruch 1, worin die Säuglingsanfangsnahrung im Wesentlichen frei von Soja-Phospholipiden, Ei-Phospholipiden und Kombinationen davon ist.

**10.** Eine Säuglingsanfangsnahrung gemäß Anspruch 1, worin die Säuglingsanfangsnahrung weniger als ungefähr 0,2 Gewichtsprozent Milchfett auf einer wie zugeführt Basis umfasst.

**11.** Eine Säuglingsanfangsnahrung gemäß Anspruch 1, worin die Säuglingsanfangsnahrung ein Pulver oder eine verabreichungsfertige Flüssigkeit ist.

**12.** Eine Säuglingsanfangsnahrung gemäß Anspruch 1, die auf einer wie zugeführt Basis von ungefähr 6,5 g/l bis ungefähr 10,9 g/l angereichertes Molkenproteinkonzentrat umfasst.

**13.** Eine Säuglingsanfangsnahrung gemäß Anspruch 1, worin von ungefähr 60 Gewichtsprozent bis ungefähr 90 Gewichtsprozent jeweils der Ganglioside, der Phospholipide, des Lactoferrins und der Sialsäure von dem angereicherten Molkenproteinkonzentrat geliefert werden, wobei das Konzentrat mindestens ungefähr 6,5 g/l der Anfangsnahrung auf einer wie zugeführt Basis darstellt.

**14.** Eine Säuglingsanfangsnahrung, die, auf einer wie zugeführt Basis, Folgendes umfasst:

(A) mindestens ungefähr 5 mg/l Ganglioside,
(B) mindestens ungefähr 150 mg/l Phospholipide,
(C) Lactoferrin,
(D) mindestens ungefähr 70 mg/l Gesamt-Sialsäure, wobei mindestens ungefähr 2,5 Gewichtsprozent der Sialsäure als Lipid-gebundene Sialsäure vorliegen,

worin von ungefähr 50 Gewichtsprozent bis 100 Gewichtsprozent jeweils der Ganglioside, der Phospholipide, des Lactoferrins und der Sialsäure von einem angereicherten Molkenproteinkonzentrat geliefert werden, wobei das Konzentrat mindestens ungefähr 6,5 g/l der Anfangsnahrung auf einer wie zugeführt Basis darstellt,
zur Verwendung in der Reduzierung des Risikos von Durchfall bei einem Säugling oder zur Verwendung in der Erzeugung eines Darm-Bakterienflora-Profils ähnlich demjenigen gestillter Säuglinge, durch Zuführung der Anfangsnahrung an den Säugling oder Anweisung an einen Pfleger, dieselbe zu verabreichen.

**15.** Eine Säuglingsanfangsnahrung gemäß Anspruch 14, worin die Anfangsnahrung als alleinige Nahrungsquelle zugeführt wird.

**16.** Eine Säuglingsanfangsnahrung gemäß Anspruch 16, worin die Säuglingsanfangsnahrung, auf einer wie zugeführt Basis, von ungefähr 50 mg/l bis ungefähr 2000 mg/l Lactoferrin umfasst, wobei mindestens ungefähr 6 Gewichtsprozent des Lactoferrins als natives Lactoferrin vorliegen.

**17.** Eine Säuglingsanfangsnahrung gemäß Anspruch 14, worin die Lipid-gebundene Sialsäure von ungefähr 2,7 Gewichtsprozent bis ungefähr 5 Gewichtsprozent der gesamten Sialsäure darstellt.

**18.** Eine Säuglingsanfangsnahrung gemäß Anspruch 14, worin die Säuglingsanfangsnahrung auf einer wie zugeführt Basis folgendes umfasst: (A) von ungefähr 7 mg/l bis ungefähr 50 mg/l Ganglioside, (B) von ungefähr 200 mg/l bis ungefähr 600 mg/l Phospholipide, und (C) von ungefähr 90 mg/l bis ungefähr 250 mg/l Sialsäure umfasst.

**19.** Eine Säuglingsanfangsnahrung gemäß Anspruch 14, worin das gesamte Phospholipid mindestens 20 Gewichtsprozent Sphingomyelin umfasst.

**20.** Eine Säuglingsanfangsnahrung gemäß Anspruch 14, worin die Säuglingsanfangsnahrung weniger als ungefähr 0,2 Gewichtsprozent Milchfett auf einer wie zugeführt Basis umfasst.

**21.** Eine Säuglingsanfangsnahrung gemäß Anspruch 14, worin die Anfangsnahrung weniger als 0,5 Gewichtsprozent freie Glycomacropeptide auf einer wie zugeführt Basis umfasst.

**22.** Eine Säuglingsanfangsnahrung gemäß Anspruch 14, worin die Säuglingsanfangsnahrung, auf einer wie zugeführt Basis, von ungefähr 6,5 g/l bis ungefähr 10,9 g/l angereichertes Molkenproteinkonzentrat umfasst.

**23.** Eine Säuglingsanfangsnahrung gemäß Anspruch 14, worin von ungefähr 60 Gewichtsprozent bis ungefähr 90 Gewichtsprozent jeweils der Ganglioside, der Phospholipide, des Lactoferrins und der Sialsäure vom angereicherten Molkenproteinkonzentrat geliefert werden, wobei das Konzentrat mindestens ungefähr 6,5 g/l der Anfangsnahrung auf einer wie zugeführt Basis darstellt.

**24.** Eine Säuglingsanfangsnahrung gemäß Anspruch 14 zur Verwendung in der Erzeugung eines Darm-Bakterienflora-Profils ähnlich demjenigen gestillter Säuglinge, worin von ungefähr 50 Gewichtsprozent bis 100 Gewichtsprozent der Kombination aus Gangliosiden, Phospholipiden und Sialsäure von einem angereicherten Molkenproteinkonzentrat stammen.

**25.** Eine Säuglingsanfangsnahrung gemäß Anspruch 14 zur Verwendung in der Erzeugung eines Darm-Bakterienflora-Profils ähnlich demjenigen gestillter Säuglinge, worin die Anfangsnahrung weiter von ungefähr 0,05% bis ungefähr 5% Fructopolysaccharid umfasst.

**Revendications**

**1.** Formule pour bébés comprenant, sur une base telle qu'administrée :

(A) au moins environ 5 mg/l de gangliosides,
(B) au moins environ 150 mg/l de phospholipides,
(C) de la lactoferrine, et
(D) au moins environ 70 mg/l d'acide sialique, au moins environ 2,5 % en poids de l'acide sialique étant sous forme d'acide sialique lié à des lipides ;

où environ 50 % à 100 % en poids de chacun des gangliosides, phospholipides, lactoferrine et acide sialique sont fournis par un concentré de protéines de petit lait enrichi, ledit concentré représentant au moins environ 6,5 g/l de la formule sur une base telle qu'administrée.

**2.** Formule pour bébés selon la revendication 1 où l'acide sialique lié à des lipides représente environ 2,7 % à environ 5 % en poids de l'acide sialique total.

**3.** Formule pour bébés selon la revendication 1 comprenant, sur une base telle qu'administrée, (A) environ 7 mg/l à environ 50 mg/l de gangliosides, (B) environ 200 mg/l à environ 600 mg/l de phospholipides, et (C) environ 90 mg/l à environ 250 mg/l d'acide sialique.

**4.** Formule pour bébés selon la revendication 1 comprenant, sur une base telle qu'administrée, environ 50 mg/l à environ 2 000 mg/l de lactoferrine, au moins environ 6 % en poids de la lactoferrine étant sous forme de lactoferrine native.

**5.** Formule pour bébés selon la revendication 1 où les phopholipides totaux comprennent au moins 20 % en poids de sphingomyéline.

**6.** Formule pour bébés selon la revendication 5 où les phospholipides comprennent sphingomyéline, phosphatidyléthanolamine, phosphatidylcholine, phosphatidylinositol et phosphatidylsérine.

**7.** Formule pour bébés selon la revendication 1 comprenant en outre 0,05 % à environ 5 % d'un fructopolysaccharide.

**8.** Formule pour bébés selon la revendication 1 où la formule contient moins d'environ 0,5 % de glycomacropeptides libres, sur une base telle qu'administrée.

**9.** Formule pour bébés selon la revendication 1 où la formule pour bébés est sensiblement exempte de phospholipides de soja, de phospholipides d'oeuf et de leurs combinaisons.

10. Formule pour bébés selon la revendication 1 où la formule pour bébés comprend moins d'environ 0,2 % en poids de matières grasses du lait sur une base telle qu'administrée.

11. Formule pour bébés selon la revendication 1 où la formule pour bébés est une poudre ou un liquide prêt à l'emploi.

12. Formule pour bébés selon la revendication 1 comprenant, sur une base telle qu'administrée, environ 6,5 g/l à environ 10,9 g/l de concentré de protéines de petit-lait enrichi.

13. Formule pour bébés selon la revendication 1, où environ 60 % à environ 90 % en poids de chacun des gangliosides, phospholipides, lactoferrine et acide sialique sont fournis par le concentré de protéines de petit-lait enrichi, ledit concentré représentant au moins environ 6,5 g/l de la formule sur une base telle qu'administrée.

14. Formule pour bébés comprenant, sur une base telle qu'administrée :

   (A) au moins environ 5 mg/l de gangliosides,
   (B) au moins environ 150 mg/l de phospholipides,
   (C) de la lactoferrine,
   (D) au moins environ 70 mg/l d'acide sialique total, au moins environ 2,5 % en poids de l'acide sialique étant sous forme d'acide sialique lié à des lipides ;

   où environ 50 % à 100 % en poids de chacun des gangliosides, phospholipides, lactoferrine et acide sialique sont fournis par un concentré de protéines de petit-lait enrichi, ledit concentré représentant au moins environ 6,5 g/l de la formule sur une base telle qu'administrée,
   pour utilisation dans la réduction du risque de diarrhée chez le bébé ou pour utilisation dans la production d'un profil de microflore intestinale similaire à celui des enfants nourris au sein, par administration ou instruction donnée à un soignant d'administration de la formule audit bébé.

15. Formule pour bébés selon la revendication 14 où la formule est administrée comme seule source nutritionnelle.

16. Formule pour bébés selon la revendication 16 où la formule pour bébés comprend, sur une base telle qu'administrée, environ 50 mg/l à environ 2 000 mg/l de lactoferrine, au moins environ 6 % en poids de la lactoferrine étant sous forme de lactoferrine native.

17. Formule pour bébés selon la revendication 14 où l'acide sialique lié à des lipides représente environ 2,7 % à environ 5 % en poids de l'acide sialique total.

18. Formule pour bébés selon la revendication 14 où la formule pour bébés comprend, sur une base telle qu'administrée, (A) environ 7 mg/l à environ 50 mg/l de gangliosides, (B) environ 200 mg/l à environ 600 mg/l de phospholipides et (C) environ 90 mg/l à environ 250 mg/l d'acide sialique.

19. Formule pour bébés selon la revendication 14 où les phospholipides totaux comprennent au moins 20 % en poids de sphingomyéline.

20. Formule pour bébés selon la revendication 14 où la formule pour bébés comprend moins d'environ 0,2 % en poids de matières grasses du lait sur une base telle qu'administrée.

21. Formule pour bébés selon la revendication 14 où la formule comprend moins de 0,5 % en poids de glycomacropeptides libres sur une base telle qu'administrée.

22. Formule pour bébés selon la revendication 14 où la formule pour bébés comprend, sur une base telle qu'administrée, environ 6,5 g/l à environ 10,9 g/l de concentré de protéines de petit-lait enrichi.

23. Formule pour bébés selon la revendication 14 où environ 60 % à environ 90 % en poids de chacun des gangliosides, phospholipides, lactoferrine et acide sialique sont fournis par le concentré de protéines de petit-lait enrichi, ledit concentré représentant au moins environ 6,5 g/l de la formule sur une base telle qu'administrée.

**24.** Formule pour bébés selon la revendication 14 pour utilisation dans la production d'un profil de microflore intestinale similaire à celui des bébés nourris au sein, où environ 50 % à 100 % en poids de la combinaison de gangliosides, phospholipides et acide sialique sont représentés par un concentrée de protéines de petit-lait enrichi.

**25.** Formule pour bébés selon la revendication 14 pour utilisation dans la production d'un profil de microflore intestinale similaire à celui des bébés nourris au sein, où la formule comprend en outre environ 0,05 % à environ 5 % d'un fructopolysaccharide.

Fig.1 :  Short chain fatty acid profile for conventional infant formula with 0.5 g/L FOS after 72 hours in the presence of breast-fed flora.

Fig. 2. Short chain fatty acid profile for conventional infant formula with 2.0 g/L short chain FOS after 72 hrs in the presence of breast-fed flora.

Fig. 3. Short chain fatty acid profile for conventional infant formula with 2.0 g/L short chain FOS after 72 hrs in the presence of breast-fed flora.

Fig. 4. Short chain fatty acid profile for infant formula embodiment of the present invention with 0.8 g/L FOS after 72 hrs in the presence of breast-fed flora.

Fig. 5. Typical short chain fatty acid profile in the colon of breast-fed infants

15%   0%

85%

☑ Acetate
■ Propionate
☐ n-Butyrate

Fig. 6. Typical short chain fatty acid profile in the colon of infants fed conventional milk-based infant formulas as a sole source of nutrition

19%

55%

26%

## Duration of diarrhea

Fig.7. Duration of episodes of diarrhea in piglets fed different diets (Group A - Conventional formula; Groups B and C - formula embodiments of the present invention). Data are Mean ± SEM. (*) Significantly different from group A (p<0.05)

**Duration of diarrhea**

Fig. 8. Duration (days) of episodes of diarrhea in piglets fed the Experiment III diets (Diet A,B or C).

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- US 6365218 B, Borschel

- US 20030118703 A1, Nguyen

### Non-patent literature cited in the description

- **Ladisch S. ; Gillard B.** A solvent partition method for microscale ganglioside purification. *Anal. Biochem,* 1985, vol. 146, 220-231
- **Williams M ; McCluer R.** The use of Sep-PakTM C18 cartridges during the isolation of gangliosides. *J. Neurochem,* 1980, vol. 35, 266-269
- **Gazzotti G. ; Sonnion S. ; Ghidonia R.** Normal-phase high-performance liquid chromatographic separation of non-derivatized ganglioside mixtures. *J Chromatogr.,* 1985, vol. 348, 371-378
- **Gibson, G.R. ; M.B. Roberfroid.** Dietary modulation of the human colonic microbiota: introducing the concept of prebiotics. *Journal of Nutrition,* 1995, vol. 125, 1401-1412

- **Gross, S. ; Helm, K. ; Klarczyk, M. ; Schopfer H. ; Bockler, H.-M. ; Wells, J.** Colon microflora in infants fed formula with galacto- and fructo-oligosaccharides: more like breastfed infants. *Journal Pediatric Gastroenterology,* 2004, vol. 40 (1), 36-42
- **Marteen H.M.C. van Nuenen ; P. Diederick Meyer ; Koen Venema.** The effects of various inulins and Clostridium difficile on the metabolic activity of the human colonic microbiota in vitro. *Microbial Ecology in Health Disease,* 2003, vol. 15, 137-144
- **Miller, E.R. ; Ullrey.** The pig as model for human nutrition. *Annu Rev Nutr,* 1987, vol. 7, 361-82